# EUROPEAN PATENT APPLICATION

(11) **EP 4 585 645 A1**
(43) Date of publication of application: **16.07.2025**
(21) Application number: 24151974.3
(22) Date of filing: 15.01.2024
(51) Int. Cl.: C08L 69/00

(54) **FLAME RETARDANT POLYCARBONATE COMPOSITIONS**

(71) Applicant: SHPP Global Technologies B.V., 4612 PX Bergen op Zoom (NL)
(72) Inventor: LUGGER, Jody Ann Martin, Bergen op Zoom (NL); MEE, Mark Adrianus Johannes, Bergen op Zoom (NL); SCHWARTZ, Erik, Bergen op Zoom (NL); GRAMPEL, Robert Dirk, Bergen op Zoom (NL)
(74) Representative: Balder IP Law, S.L.

(57) **Abstract**

A polycarbonate composition comprises: a polycarbonate; or a polycarbonate and a poly(alkylene ester); optionally, a nitrile-containing aromatic copolymer comprising acrylonitrile butadiene styrene copolymer, styrene acrylonitrile copolymer, or a combination thereof; a siloxane component comprising a poly(etherimide-siloxane) and optionally, a polycarbonate siloxane); a flame retardant composition comprising a non-fluorinated flame retardant and optionally, an anti-drip agent; optionally, a reinforcing filler; optionally, an additive composition; wherein the sum of the polycarbonate, the poly(etherimide-siloxane), the flame retardant composition, the optional polycarbonate siloxane), the optional reinforcing filler, and the optional additive composition totals 100 wt%. The polycarbonate compositions provide improved flame test ratings, while also reducing or eliminating the use of fluorinated additives.

## Description

### BACKGROUND

This disclosure relates to polycarbonate compositions, and in particular to flame-retardant polycarbonate compositions, methods of manufacture, and uses thereof in thin-wall articles.

Polycarbonates are useful in the manufacture of articles and components for a wide range of applications, from automotive parts to electronic and electrical appliances. Because of their broad use, particularly in electronics, it is desirable to provide polycarbonate compositions with excellent flame test resistance, which may be particularly difficult to achieve in thin-wall applications. In addition, more stringent regulations are being put in place to reduce or eliminate the presence of halogens, in particular fluorine, in the final products.

There accordingly remains a need in the art for flame-retardant polycarbonate compositions suitable for thin-wall applications. It would be a further advantage if the compositions were essentially fluorine-free.

### SUMMARY

The above-described and other deficiencies of the art are met by a polycarbonate composition including: a polycarbonate, or a polycarbonate and poly(alkylene ester); optionally, a nitrile-containing aromatic copolymer including acrylonitrile butadiene styrene copolymer, styrene acrylonitrile copolymer, or a combination thereof; a siloxane component including a poly(etherimide-siloxane) and optionally, a polycarbonate siloxane); a flame retardant composition including a non-fluorinated flame retardant and optionally, an anti-drip agent; optionally, a reinforcing filler; and optionally, an additive composition, wherein the sum of the polycarbonate, the optional poly(alkylene ester), the optional nitrile-containing aromatic copolymer, the siloxane component, the flame retardant composition; the optional reinforcing filler; and the optional an additive composition total 100 wt%.

In another aspect, a method of manufacture includes combining the above-described components to form a polycarbonate composition.

In yet another aspect, an article includes the above-described polycarbonate composition.

In still another aspect, a method of manufacture of an article includes molding, extruding, or shaping the above-described polycarbonate composition into an article.

The above described and other features are exemplified by the following detailed description, examples, and claims.

### DETAILED DESCRIPTION

Polycarbonates are thermoplastic resins with many desirable properties, but are inherently flammable. Current design trends are focused on thinner designs for purposes of slimness, weight reduction, and size reduction of the overall final product, as well as to for the purpose of more complex designs. However, polycarbonates tend to drip when exposed to a flame, and this behavior worsens as the wall thickness decreases. The UL 94 flammability test includes both short flame out times and no dripping of flaming particles as requirements for a V-0 or V-1 flame test rating. Conventional compositions often incorporate flame retardant compositions ("packages") that include fluorine-based anti-drip agents either alone or in combination with non-halogenated flame retardants in order to pass the UL94 flame test. Given that more stringent regulations are being put in place to reduce or eliminate the intentional addition of halogenated materials, for example, perfluoroalkyl and polyfluoroalkyl substances (PFAS), to compositions used to make final products, there is a need in the art for polycarbonate compositions that may achieve a V-0 or V-1 flame test rating for thin-walled molded samples and/or thin films, while also minimizing and/or eliminating the intentional addition of PFAS into the polycarbonate compositions used to make the molded samples and/or thin films.

The inventors hereof have discovered that polycarbonate compositions can achieve the desired flame test rating while also reducing or eliminating the presence of intentionally added fluorinated additives. The polycarbonate compositions include: a polycarbonate, and optionally, a poly(alkylene ester); a siloxane component including a poly(etherimide-siloxane) and optionally, a polycarbonate siloxane); and a flame retardant composition including a non-fluorinated flame retardant and optionally, an anti-drip agent. The polycarbonate composition may include intentionally added fluorine-containing materials (e.g., fluorinated additives such as in the flame retardant composition) in an amount effective to provide 1500 ppm or less fluorine to the total composition, and wherein a sample of the polycarbonate composition exhibits a LTL-94 rating of V-0 at a thickness of 1.5 millimeters or less. This combination may provide the desired flame retardance while eliminating the need for flame retardant compositions that include fluorinated additives, such as fluorinated flame retardants and anti-drip agents. Surprisingly, unlike conventional compositions, fluorinated anti-drip agents may be reduced or omitted in the present polycarbonate compositions, thus reducing or eliminating added fluorine while providing improved flame test performance.

An additional advantage of the polycarbonate compositions is that polymeric materials such as styrene-acrylonitrile copolymer (SAN) and/or acrylonitrile-butadiene-styrene graft copolymer (ABS) can be included while also achieving superior flame test ratings for thin-walled articles and reducing/excluding intentionally added fluorine-containing additives. The processing characteristics of the polycarbonates and the physical properties they impose on the finished products make it desirable to blend the polycarbonates with other polymeric materials such as SAN, e.g., to improve the flow and processability, and/or ABS to improve the flow characteristics and low temperature impact resistance. However, polycarbonate blends including an ABS resin are particularly challenging substrates due to the inherently high flammability of the ABS resin component. SAN is also inherently flammable, having an HB rating in the UL-94 flame test. For resin blends including highly flammable polymers, such as the ABS resins, it is necessary to add relatively large amounts of flame retardant additives, sometimes as high as the amount of the ABS resin present in the resin blend to achieve robust flame performance (e.g., V-0) for molded parts having relatively thin walls (example, less than or equal to 2 millimeters wall thickness).

Advantageously, the polycarbonate compositions may have a UL-94 flame test rating of V-0 at a thickness of 1.5 mm or thinner and be considered "essentially fluorine-free." As used herein, the phrase "essentially fluorine-free" means that the amount of calculated intentionally added fluorine present in the composition is 1500 ppm or less, 1200 ppm or less, less than 1000 ppm, less than 500 ppm, less than 100 ppm, or less than 50 ppm. For example, if 0.1 wt% encapsulated polytetrafluoroethylene, (e.g., TSAN, which is about 50 wt% PTFE and PFTE estimated to have about 76 wt% fluorine content), the amount of calculated intentionally added fluorine would equal 657 ppm. Further, the polycarbonate compositions of the present disclosure may have zero intentionally added fluorine.

In some aspects, the polycarbonate compositions may have a UL-94 flame test rating of V-0 at a thickness of 1.5 mm or thinner and be considered "essentially halogen-free" per IEC 61249-2-21 or UL 746H. As used herein, the phrase "essentially halogen-free" is as defined by IEC 61249-2-21 or UL 746H. According to International Electrochemical Commission, Restriction Use of Halogen (IEC 61249-2-21), a composition should include 900 parts per million (ppm) or less of each of chlorine and bromine and also include 1500 ppm or less of total bromine, chlorine, and fluorine content. According to LTL 746H, a composition should include 900 ppm or less of each of chlorine, bromine, and fluorine and 1500 ppm or less of the total chlorine, bromine, and fluorine content. The bromine, chlorine, and fluorine content in ppm may be calculated from the composition or measured by elemental analysis techniques. Conventional flame retardant compositions that include non-halogenated flame retardants may include or exclude halogens, but commonly employed anti-drip agents include PTFE or PTFE-encapsulated styrene-acrylonitrile copolymers (e.g., TSAN) and thus include fluorine. Non-halogenated flame retardants that are not brominated, chlorinated, or fluorinated have been used in conventional flame retardant compositions of polycarbonate compositions, but an anti-drip agent is usually present in combination with the non-halogenated flame retardant, causing the halogen content of the composition to exceed the 1500 ppm total halogen limit per IEC 61249-2-21 and LTL 746H. Similarly, when non-halogenated flame retardants that are not brominated or chlorinated, but are fluorinated are used in combination with a fluorinated anti-drip agent, then the halogen content of the composition due to the presence of fluorine exceeds the 1500 ppm total halogen limit per IEC 61249-2-21 or UL 746H. Therefore, it would be a particular advantage if conventional anti-drip agents could be minimized or eliminated, so that the anti-drip agent does not contribute halogen content to the total halogen content of the compositions. Accordingly, a variety of non-halogenated flame retardants that include or exclude halogens may be used in polycarbonate compositions so that the compositions may be considered "essentially halogen-free" per IEC 61249-2-21 or LTL 746H.

The polycarbonate compositions include: a polycarbonate, or a polycarbonate and a poly(alkylene ester); a siloxane component including a poly(etherimide-siloxane) and optionally, a polycarbonate siloxane); and a flame retardant composition including a non-fluorinated flame retardant, and optionally, an anti-drip agent. Each component will be discussed in detail below.

The polycarbonate compositions include one or more polycarbonates. "Polycarbonate" as used herein means a polymer having repeating structural carbonate units of formula (1) 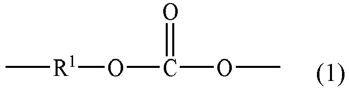 in which at least 60 percent of the total number of R¹ groups contain aromatic moieties and the balance thereof are aliphatic, alicyclic, or aromatic. In an aspect, each R¹ is a C₆₋₃₀ aromatic group, that is, contains at least one aromatic moiety. R¹ can be derived from an aromatic dihydroxy compound of the formula HO-R¹-OH, in particular of formula (2)

HO-A¹-Y¹-A²-OH (2)

wherein each of A¹ and A² is a monocyclic divalent aromatic group and Y¹ is a single bond or a bridging group having one or more atoms that separate A¹ from A². In an aspect, one atom separates A¹ from A². Preferably, each R¹ can be derived from a bisphenol of formula (3) 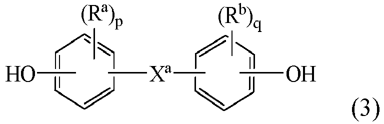 wherein R^{a} and R^{b} are each independently a halogen, C₁₋₁₂ alkoxy, or C₁₋₁₂ alkyl, and p and q are each independently integers of 0 to 4. It will be understood that when p or q is less than 4, the valence of each carbon of the ring is filled by hydrogen. Also in formula (3), X^{a} is a bridging group connecting the two hydroxy-substituted aromatic groups, where the bridging group and the hydroxy substituent of each C₆ arylene group are disposed ortho, meta, or para (preferably para) to each other on the C₆ arylene group. In an aspect, the bridging group X^{a} is single bond, - O-, -S-, -S(O)-, -S(O)₂-, -C(O)-, or a C₁₋₆₀ organic group. The organic bridging group can be cyclic or acyclic, aromatic or non-aromatic, and can further include heteroatoms such as halogens, oxygen, nitrogen, sulfur, silicon, or phosphorous. The ₁₋₆₀ organic group can be disposed such that the C₆ arylene groups connected thereto are each connected to a common alkylidene carbon or to different carbons of the C₁₋₆₀ organic bridging group. In an aspect, p and q is each 1, and R^{a} and R^{b} are each a C₁₋₃ alkyl group, preferably methyl, disposed meta to the hydroxy group on each arylene group.

In an aspect, X^{a} is a C₃₋₁₈ cycloalkylidene, a C₁₋₂₅ alkylidene of formula - C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl, or a group of the formula - C(=R^{e})- wherein R^{e} is a divalent C₁₋₁₂ hydrocarbon group. Groups of these types include methylene, cyclohexylmethylidene, ethylidene, neopentylidene, and isopropylidene, as well as 2-[2.2.1]-bicycloheptylidene, cyclohexylidene, 3,3-dimethyl-5-methylcyclohexylidene, cyclopentylidene, cyclododecylidene, and adamantylidene.

In another aspect, X^{a} is a C₁₋₁₈ alkylene, a C₃₋₁₈ cycloalkylene, a fused C₆₋₁₈ cycloalkylene, or a group of the formula -J¹-G-J²- wherein J¹ and J² are the same or different C₁₋₆ alkylene and G is a C₃₋₁₂ cycloalkylidene or a C₆₋₁₆ arylene.

For example, X^{a} can be a substituted C₃₋₁₈ cycloalkylidene of formula (4) 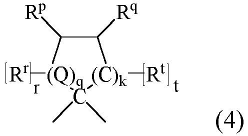 wherein R^{f}, R^{p}, R^{q}, and R^{t} are each independently hydrogen, halogen, oxygen, or C₁₋₁₂ hydrocarbon groups; Q is a direct bond, a carbon, or a divalent oxygen, sulfur, or -N(Z)- where Z is hydrogen, halogen, hydroxy, C₁₋₁₂ alkyl, C₁₋₁₂ alkoxy, C₆₋₁₂ aryl, or C₁₋₁₂ acyl; r is 0 to 2, t is 1 or 2, q is 0 or 1, and k is 0 to 3, with the proviso that at least two of R^{r}, R^{p}, R^{q}, and R^{t} taken together are a fused cycloaliphatic, aromatic, or heteroaromatic ring. It will be understood that where the fused ring is aromatic, the ring as shown in formula (4) will have an unsaturated carbon-carbon linkage where the ring is fused. When k is one and q is 0, the ring as shown in formula (4) contains 4 carbon atoms, when k is 2, the ring as shown in formula (4) contains 5 carbon atoms, and when k is 3, the ring contains 6 carbon atoms. In an aspect, two adjacent groups (e.g., R^{q} and R^{t} taken together) form an aromatic group, and in another aspect, R^{q} and R^{t} taken together form one aromatic group and R^{f} and R^{p} taken together form a second aromatic group. When R^{q} and R^{t} taken together form an aromatic group, R^{p} can be a double-bonded oxygen atom, i.e., a ketone, or Q can be -N(Z)- wherein Z is phenyl.

Bisphenols wherein X^{a} is a cycloalkylidene of formula (4) can be used in the manufacture of polycarbonates containing phthalimidine carbonate units of formula (1a) 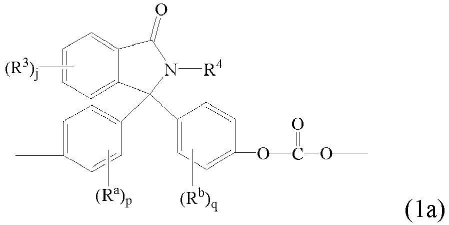 wherein R^{a}, R^{b}, p, and q are as in formula (3), R³ is each independently a C₁₋₆ alkyl, j is 0 to 4, and R₄ is hydrogen, C₁₋₆ alkyl, or a substituted or unsubstituted phenyl, for example a phenyl substituted with up to five C₁₋₆ alkyls. For example, the phthalimidine carbonate units are of formula (1b) 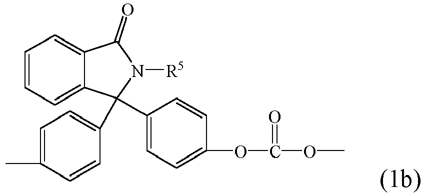 wherein R⁵ is hydrogen, phenyl optionally substituted with up to five 5 C₁₋₆ alkyls, or C₁₋₄ alkyl. In an aspect in formula (1b), R⁵ is hydrogen, methyl, or phenyl, preferably phenyl. Carbonate units (1b) wherein R⁵ is phenyl can be derived from 2-phenyl-3,3'-bis(4-hydroxy phenyl)phthalimidine (also known as 3,3-bis(4-hydroxyphenyl)-2-phenylisoindolin-1-one, or N-phenyl phenolphthalein bisphenol.

Other bisphenol carbonate repeating units of this type are the isatin carbonate units of formula (1c) and (1d) 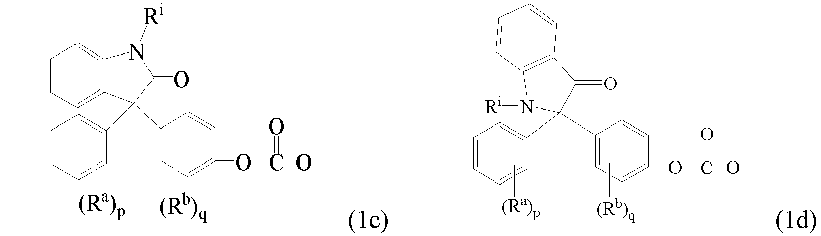 wherein R^{a} and R^{b} are each independently a halogen, C₁₋₁₂ alkoxy, or C₁₋₁₂ alkyl, p and q are each independently 0 to 4, and Rⁱ is C₁₋₁₂ alkyl, phenyl optionally substituted with 1 to 5 C₁₋₁₀ alkyl, or benzyl optionally substituted with 1 to 5 C₁₋₁₀ alkyl. In an aspect, R^{a} and R^{b} are each methyl, p and q are each independently 0 or 1, and R¹ is C₁₋₄ alkyl or phenyl.

Other examples of bisphenol carbonate units derived from of bisphenols (3) wherein X^{a} is a substituted or unsubstituted C₃₋₁₈ cycloalkylidene include the cyclohexylidene-bridged bisphenol of formula (1e) 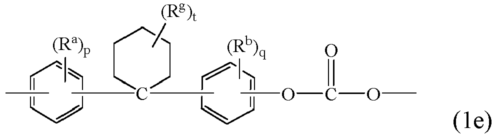 wherein R^{a} and R^{b} are each independently C₁₋₁₂ alkyl, R^{g} is C₁₋₁₂ alkyl, p and q are each independently 0 to 4, and t is 0 to 10. In a specific aspect, at least one of each of R^{a} and R^{b} are disposed meta to the cyclohexylidene bridging group. In an aspect, R^{a} and R^{b} are each independently C₁₋₄ alkyl, R^{g} is C₁₋₄ alkyl, p and q are each 0 or 1, and t is 0 to 5. In another specific aspect, R^{a}, R^{b}, and R^{g} are each methyl, p and q are each 0 or 1, and t is 0 or 3, preferably 0. In still another aspect, p and q are each 0, each R^{g} is methyl, and t is 3, such that X^{a} is 3,3-dimethyl-5-methyl cyclohexylidene.

Examples of other bisphenol carbonate units derived from bisphenol (3) wherein X^{a} is a substituted or unsubstituted C₃₋₁₈ cycloalkylidene include adamantyl units of formula (1f) and fluorenyl units of formula (1g) 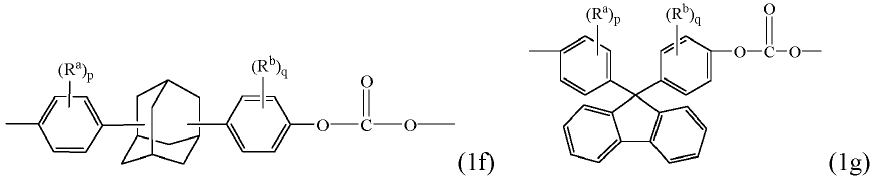 wherein R^{a} and R^{b} are each independently C₁₋₁₂ alkyl, and p and q are each independently 1 to 4. In a specific aspect, at least one of each of R^{a} and R^{b} are disposed meta to the cycloalkylidene bridging group. In an aspect, R^{a} and R^{b} are each independently C₁₋₃ alkyl, and p and q are each 0 or 1; preferably, R^{a}, R^{b} are each methyl, p and q are each 0 or 1, and when p and q are 1, the methyl group is disposed meta to the cycloalkylidene bridging group. Carbonates containing units (1a) to (1g) are useful for making polycarbonates with high glass transition temperatures (Tg) and high heat distortion temperatures.

Other useful dihydroxy compounds of the formula HO-R¹-OH include aromatic dihydroxy compounds of formula (6) 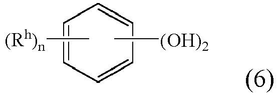 wherein each R^{h} is independently a halogen atom, C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4. The halogen is usually bromine.

Some illustrative examples of specific dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or a combination thereof.

Specific examples of bisphenol compounds of formula (3) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-2-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). A combination can also be used. In a specific aspect, the polycarbonate is a linear homopolymer derived from bisphenol A, in which each of A¹ and A² is p-phenylene and Y¹ is isopropylidene in formula (3).

The polycarbonates may have an intrinsic viscosity, as determined in chloroform at 25°C, of 0.3 to 1.5 deciliters per gram (dl/gm), preferably 0.45 to 1.0 dl/gm. The polycarbonates may have a weight average molecular weight (Mw) of 10,000 to 200,000 g/mol, preferably 20,000 to 100,000 g/mol, as measured by gel permeation chromatography (GPC), using a crosslinked styrene-divinylbenzene column using polystyrene standards and calculated for polycarbonate. GPC samples are prepared at a concentration of 1 mg per ml, and are eluted at a flow rate of 1.5 ml per minute. As used herein, "using polystyrene standards and calculated for polycarbonate" refers to measurement of the retention time by GPC, fitting the retention time value to a curve for polystyrene and calculating the molecular weight for polycarbonate.

The polycarbonate compositions may include a homopolycarbonate (wherein each R¹ in the polymer is the same). In an aspect, the homopolycarbonate in the polycarbonate composition is derived from a bisphenol of formula (2), preferably bisphenol A, in which each of A¹ and A² is p-phenylene and Y¹ is isopropylidene in formula (2).

The polycarbonate compositions include a homopolycarbonate (wherein each R¹ in the polymer is the same). In an aspect, more than one homopolycarbonate may be present. For example, the homopolycarbonate may include a first homopolycarbonate having a first weight average molecular weight, and a second homopolycarbonate having a second weight average molecular weight, wherein the first and second weight average molecular weights are not the same.

The polycarbonate may have a weight average molecular weight of 25,000 g/mol or more, for example 25,000 to 100,000 g/mol, or 25,000 to 75,000 g/mol, or 25,000 to 40,000 g/mol, or 25,000 to 38,000 g/mol, or 29,000 to 45,000 g/mol. Molecular weight may be determined by gel permeation chromatography (GPC), using polystyrene standards and calculated for polycarbonate. GPC samples are prepared at a concentration of 1 milligram per milliliter (mg/mL) and are eluted at a flow rate of 1.5 ml per minute. As used herein, "using polystyrene standards and calculated for polycarbonate" refers to measurement of the retention time by GPC, fitting the retention time value to a curve for polystyrene and calculating the molecular weight for polycarbonate.

"Polycarbonates" includes homopolycarbonates (wherein each R¹ in the polymer is the same), copolymers including different R¹ moieties in the carbonate ("copolycarbonates"), and copolymers including carbonate units and other types of polymer units, such as ester units or siloxane units.

A specific type of copolymer is a poly(ester-carbonate), also known as a polyester-polycarbonate. Such copolymers further contain, in addition to recurring carbonate units of formula (1), repeating units of formula (7) 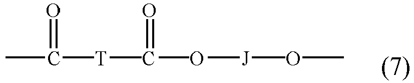 wherein J is a divalent group derived from a dihydroxy compound (including a reactive derivative thereof), and can be, for example, a C₁₋₁₀ alkylene, a C₆₋₂₀ cycloalkylene, a C₅₋₂₀ arylene, or a polyoxyalkylene in which the alkylene groups contain 2 to 6 carbon atoms, preferably 2, 3, or 4 carbon atoms; and T is a divalent group derived from a dicarboxylic acid (including a reactive derivative thereof), and can be, for example, a C₂₋₂₀ alkylene, a C₅₋₂₀ cycloalkylene, or a C₆₋₂₀ arylene. Copolyesters containing a combination of different T or J groups can be used. The polyester units can be branched or linear.

In an aspect, J is a C₂₋₃₀ alkylene group having a straight chain, branched chain, or cyclic (including polycyclic) structure, for example ethylene, n-propylene, i-proplyene, 1,4-butylene, 1,4-cyclohexylene, or 1,4-methylenecyclohexane. In another aspect, J is derived from a bisphenol of formula (3), e.g., bisphenol A. In another aspect, J is derived from an aromatic dihydroxy compound of formula (6), e.g, resorcinol.

Aromatic dicarboxylic acids that can be used to prepare the polyester units include isophthalic or terephthalic acid, 1,2-di(p-carboxyphenyl)ethane, 4,4'-dicarboxydiphenyl ether, 4,4'-bisbenzoic acid, or a combination thereof. Acids containing fused rings can also be present, such as in 1,4-, 1,5-, or 2,6-naphthalenedicarboxylic acids. Specific dicarboxylic acids include terephthalic acid, isophthalic acid, naphthalene dicarboxylic acid, 1,4-cyclohexane dicarboxylic acid, or a combination thereof. A specific dicarboxylic acid includes a combination of isophthalic acid and terephthalic acid wherein the weight ratio of isophthalic acid to terephthalic acid is 91:9 to 2:98.

Specific ester units include ethylene terephthalate, n-propylene terephthalate, n-butylene terephthalate, 1,4-cyclohexanedimethylene terephthalate, and ester units derived from isophthalic acid, terephthalic acid, and resorcinol (ITR)). The molar ratio of ester units to carbonate units in the copolymers can vary broadly, for example 1:99 to 99: 1, preferably 10:90 to 90: 10, more preferably 25:75 to 75:25, or 2:98 to 15:85, depending on the desired properties of the final composition. Specific poly(ester-carbonate)s are those including bisphenol A carbonate units and isophthalate-terephthalate-bisphenol A ester units, also commonly referred to as poly(carbonate-ester)s (PCE) poly(phthalate-carbonate)s (PPC) depending on the molar ratio of carbonate units and ester units.

The polycarbonate can be an aromatic poly(ester-carbonate). Such polycarbonates further contain, in addition to recurring carbonate units of formula (1), repeating ester units of formula (7a) 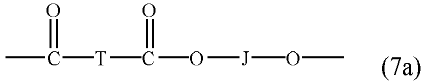 wherein J is a divalent group derived from an aromatic dihydroxy compound (including a reactive derivative thereof), such as a bisphenol of formula (2), e.g., bisphenol A; and T is a divalent group derived from an aromatic dicarboxylic acid (including a reactive derivative thereof), preferably isophthalic or terephthalic acid wherein the weight ratio of isophthalic acid to terephthalic acid is 91:9 to 2:98. Copolyesters containing a combination of different T or J groups can be used. The polyester units can be branched or linear.

In an aspect, J is derived from a bisphenol of formula (2), e.g., bisphenol A. In another aspect, J is derived from an aromatic dihydroxy compound, e.g, resorcinol. A portion of the groups J, for example up to 20 mole percent (mol%) can be a C₂₋₃₀ alkylene group having a straight chain, branched chain, or cyclic (including polycyclic) structure, for example ethylene, n-propylene, i-proplyene, 1,4-butylene, 1,4-cyclohexylene, or 1,4-methylenecyclohexane. Preferably, all J groups are aromatic.

Aromatic dicarboxylic acids that can be used to prepare the polyester units include isophthalic or terephthalic acid, 1,2-di(p-carboxyphenyl)ethane, 4,4'-dicarboxydiphenyl ether, 4,4'-bisbenzoic acid, or a combination thereof. Acids containing fused rings can also be present, such as in 1,4-, 1,5-, or 2,6-naphthalenedicarboxylic acids. Specific dicarboxylic acids include terephthalic acid, isophthalic acid, naphthalene dicarboxylic acid, or a combination thereof. A specific dicarboxylic acid includes a combination of isophthalic acid and terephthalic acid wherein the weight ratio of isophthalic acid to terephthalic acid is 91:9 to 2:98. A portion of the groups T, for example up to 20 mol%, can be aliphatic, for example derived from 1,4-cyclohexane dicarboxylic acid. Preferably all T groups are aromatic.

The molar ratio of ester units to carbonate units in the polycarbonates can vary broadly, for example 1:99 to 99: 1, preferably 10:90 to 90: 10, more preferably 25:75 to 75:25, or 2:98 to 15:85, depending on the desired properties of the final composition.

Specific poly(ester-carbonate)s are those including bisphenol A carbonate units and isophthalate/terephthalate-bisphenol A ester units, i.e., a poly(bisphenol A carbonate)-co-(bisphenol A-phthalate-ester) of formula (7a-1) 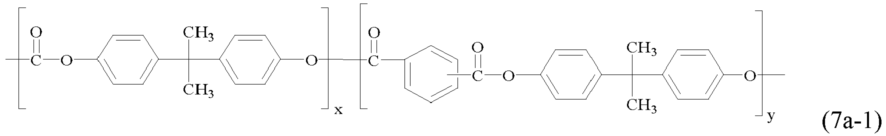 wherein x and y represent the weight percent of bisphenol A carbonate units and isophthalate/terephthalate -bisphenol A ester units, respectively. Generally, the units are present as blocks. In an aspect, the weight ratio of carbonate units x to ester units y in the polycarbonates is 1:99 to 50:50, or 5:95 to 25:75, or 10:90 to 45:55. Copolymers of formula (7a-1) including 35-45 wt% of carbonate units and 55-65 wt% of ester units, wherein the ester units have a molar ratio of isophthalate to terephthalate of 45:55 to 55:45 are often referred to as poly(carbonate-ester)s (PCE). Copolymers including 15-25 wt% of carbonate units and 75-85 wt% of ester units, wherein the ester units have a molar ratio of isophthalate to terephthalate from 98:2 to 88:12 are often referred to as poly(phthalate-carbonate)s (PPC).

In another aspect, the high heat poly(ester-carbonate) is a poly(carbonate-co-monoarylate ester) of formula (7a-2) that includes aromatic carbonate units (1) and repeating monoarylate ester units 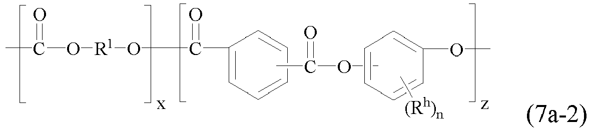 wherein R¹ is as defined in formula (1), and each R^{h} is independently a halogen atom, a C₁₋₁₀ hydrocarbyl such as a C₁₋₁₀ alkyl group, a halogen-substituted C₁₋₁₀ alkyl group, a C₆₋₁₀ aryl group, or a halogen-substituted C₆₋₁₀ aryl group, and n is 0-4. Preferably, each R^{h} is independently a C₁₋₄ alkyl, and n is 0-3, 0-1, or 0. The mole ratio of carbonate units x to ester units z can be from 99:1 to 1:99, or from 98:2 to 2:98, or from 90:10 to 10:90. In an aspect the mole ratio of x:z is from 50:50 to 99:1, or from 1:99 to 50:50.

In an aspect, the high heat poly(ester-carbonate) includes aromatic ester units and monoarylate ester units derived from the reaction of a combination of isophthalic and terephthalic diacids (or a reactive derivative thereof) with resorcinol (or a reactive derivative thereof) to provide isophthalate/terephthalate-resorcinol ("ITR" ester units). The ITR ester units can be present in the high heat poly(ester-carbonate) in an amount greater than or equal to 95 mol%, preferably greater than or equal to 99 mol%, and still more preferably greater than or equal to 99.5 mol%, based on the total moles of ester units in the polycarbonate. A preferred high heat poly(ester-carbonate) includes bisphenol A carbonate units, and ITR ester units derived from terephthalic acid, isophthalic acid, and resorcinol, i.e., a poly(bisphenol A carbonate-co-isophthalate/terephthalate-resorcinol ester) of formula (7a-3) 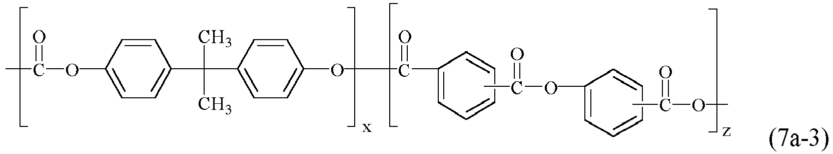 wherein the mole ratio of x:z is from 98:2 to 2:98, or from 90:10 to 10:90. In an aspect the mole ratio of x:z is from 50:50 to 99:1, or from 1:99 to 50:50. The ITR ester units can be present in the poly(bisphenol A carbonate-co-isophthalate-terephthalate-resorcinol ester) in an amount greater than or equal to 95 mol%, preferably greater than or equal to 99 mol%, and still more preferably greater than or equal to 99.5 mol%, based on the total moles of ester units in the copolymer. Other carbonate units, other ester units, or a combination thereof can be present, in a total amount of 1 to 20 mole%, based on the total moles of units in the copolymers, for example monoaryl carbonate units of formula (5) and bisphenol ester units of formula (3a): 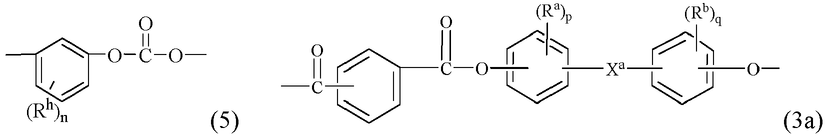 wherein, in the foregoing formulae, R^{h} is each independently a C₁₋₁₀ hydrocarbon group, n is 0-4, R^{a} and R^{b} are each independently a C₁₋₁₂ alkyl, p and q are each independently integers of 0-4, and X^{a} is a single bond, -O-, -S-, -S(O)-, -S(O)₂-, -C(O)-, or a C₁₋₁₃ alkylidene of formula - C(R^{c})(R^{d}) - wherein R^{c} and R^{d} are each independently hydrogen or C₁₋₁₂ alkyl, or a group of the formula -C(=R^{e})- wherein R^{e} is a divalent C₁₋₁₂ hydrocarbon group. The bisphenol ester units can be bisphenol A phthalate ester units of the formula (3b)

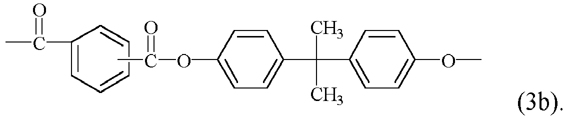

In an aspect, the poly(bisphenol A carbonate-co-isophthalate/terephthalate-resorcinol ester) (4c) includes 1-90 mol% of bisphenol A carbonate units, 10-99 mol% of isophthalic acid-terephthalic acid-resorcinol ester units, and optionally 1-60 mol% of resorcinol carbonate units, isophthalic acid-terephthalic acid-bisphenol A phthalate ester units, or a combination thereof. In another aspect, poly(bisphenol A carbonate-co-isophthalate/terephthalate resorcinol ester) (6) includes 10-20 mol% of bisphenol A carbonate units, 20-98 mol% of isophthalic acid-terephthalic acid-resorcinol ester units, and optionally 1-60 mol% of resorcinol carbonate units, isophthalic acid-terephthalic acid-bisphenol A phthalate ester units, or a combination thereof.

The polycarbonate copolymers including arylate ester units are generally prepared from polyester blocks. The polyester blocks can also be prepared by interfacial polymerization. Rather than utilizing the dicarboxylic acid or diol per se, the reactive derivatives of the acid or diol, such as the corresponding acid halides, in particular the acid dichlorides and the acid dibromides can be used. Thus, for example instead of using isophthalic acid, terephthalic acid, or a combination thereof, isophthaloyl dichloride, terephthaloyl dichloride, or a combination thereof can be used. The polyesters can also be obtained by melt-process condensation as described above, by solution phase condensation, or by transesterification polymerization wherein, for example, a dialkyl ester such as dimethyl terephthalate can be transesterified with the dihydroxy reactant using acid catalysis, to generate the polyester blocks. Branched polyester blocks, in which a branching agent, for example, a glycol having three or more hydroxyl groups or a trifunctional or multifunctional carboxylic acid has been incorporated, can be used. Furthermore, it can be desirable to have various concentrations of acid and hydroxyl end groups on the polyester blocks, depending on the ultimate end use of the composition.

The high heat poly(ester-carbonate)s can have an Mw of 2,000-100,000 g/mol, preferably 3,000-75,000 g/mol, more preferably 4,000-50,000 g/mol, more preferably 5,000-35,000 g/mol, and still more preferably 17,000-30,000 g/mol. Molecular weight determinations are performed using GPC using a cross linked styrene-divinyl benzene column, at a sample concentration of 1 milligram per milliliter, and calculated for polycarbonate. Samples are eluted at a flow rate of 1.0 ml/min with methylene chloride as the eluent.

A specific example of a poly(ester-carbonate) is a poly(aliphatic ester-carbonate derived from a linear C₆₋₂₀ aliphatic dicarboxylic acid (which includes a reactive derivative thereof), specifically a linear C₆₋₁₂ aliphatic dicarboxylic acid(which includes a reactive derivative thereof). Specific dicarboxylic acids include n-hexanedioic acid (adipic acid), n-decanedioic acid (sebacic acid), and alpha, omega-C₁₂ dicarboxylic acids such as dodecanedioic acid (DDDA). A specific poly(aliphatic ester)-polycarbonate is of formula (8): 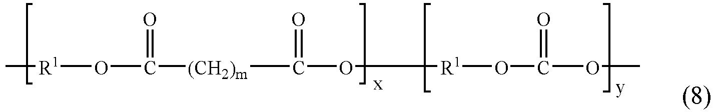 wherein each R¹ can be the same or different, and is as described in formula (1), m is 4 to 18, preferably 4 to 10, and the average molar ratio of ester units to carbonate units x:y is 99:1 to 1:99, including 13:87 to 2:98, or 9:91 to 2:98, or 8:92 to 2:98. In a specific aspect, the poly(aliphatic ester)-polycarbonate copolymer includes bisphenol A sebacate ester units and bisphenol A carbonate units, having, for example an average molar ratio of x:y of 2:98 to 8:92, for example 6:94.

The poly(aliphatic ester-carbonate) can have a weight average molecular weight of 15,000 to 40,000 g/mol, including 20,000 to 38,000 Da (measured by GPC based on BPA polycarbonate standards)

The polycarbonates may be present in the composition in an amount of 30 to 95 wt%, based on the total weight of the composition. Within this range, the polycarbonate may be present in an amount of, for example, 35 to 90 wt% or 40 to 85 wt%, each based on the total weight of the composition.

The polycarbonate compositions include a siloxane component. The siloxane component includes a poly(etherimide-siloxane) or combination of a poly(etherimide-siloxane) and a polycarbonate siloxane).

The poly(etherimide-siloxane) copolymers include polyetherimide units and polysiloxane units, for example 5 to 1000, or 10 to 500, or 10 to 100 etherimide units and siloxane units. The polyimides/polyetherimide units include structural units of formula (9) 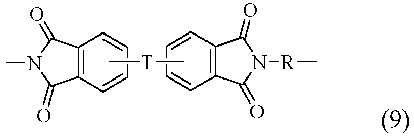 wherein each R is the same or different, and is a substituted or unsubstituted divalent organic group, such as a C₆₋₂₀ aromatic hydrocarbon group or a halogenated derivative thereof, a straight or branched chain C₂₋₂₀ alkylene group or a halogenated derivative thereof, a C₃₋₈ cycloalkylene group or halogenated derivative thereof, in particular one or more of a divalent group of the following formulas (10) 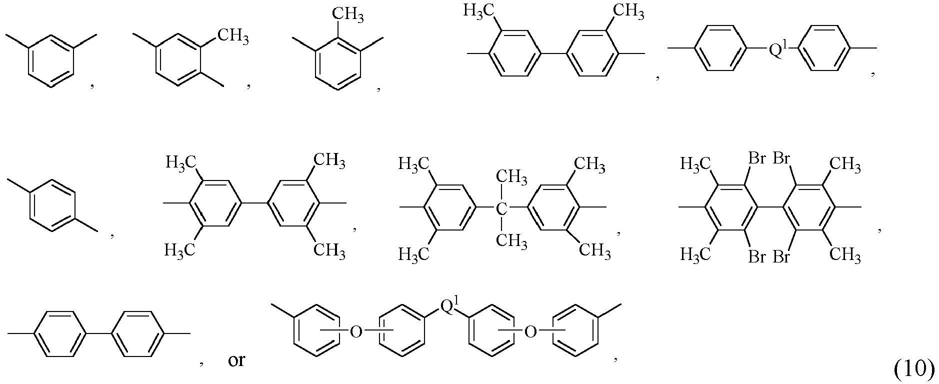 wherein Q¹ is -O-, -S-, -C(O)-, -SO₂-, -SO-, -P(R^{a})(=O)- wherein R^{a} is a C₁₋₈ alkyl or C₆₋₁₂ aryl, - C_{y}H_{2y}- wherein y is an integer from 1 to 5 or a halogenated derivative thereof (which includes perfluoroalkylene groups), or -(C₆H₁₀)_{z}- wherein z is an integer from 1 to 4. In some embodiments R is m-phenylene, p-phenylene, or a diarylene sulfone, in particular bis(4,4'-phenylene)sulfone, bis(3,4'-phenylene)sulfone, bis(3,3'-phenylene)sulfone, or a combination including at least one of the foregoing. In some embodiments, at least 10 mole percent or at least 50 mole percent of the R groups contain sulfone groups, and in other embodiments no R groups contain sulfone groups.

Further in formula (9), T is -O- or a group of the formula -O-Z-O- wherein the divalent bonds of the -O- or the -O-Z-O- group are in the 3,3', 3,4', 4,3', or the 4,4' positions. The group Z in -O-Z-O- of formula (9) is also a substituted or unsubstituted divalent organic group, and can be an aromatic C₆₋₂₄ monocyclic or polycyclic moiety optionally substituted with 1 to 6 C₁₋₈ alkyl groups, 1 to 8 halogen atoms, or a combination thereof, provided that the valence of Z is not exceeded. Exemplary groups Z include groups derived from a dihydroxy compound of formula (3-1) 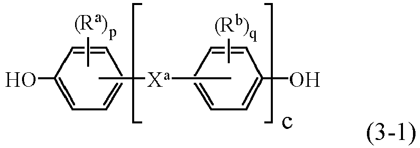 wherein R^{a} and R^{b} can be the same or different and are a halogen atom or a monovalent C₁₋₆ alkyl group, for example methyl; p and q are each independently 0 to 4; c is 0 to 4; and X^{a} is a bridging group connecting the hydroxy-substituted aromatic groups, where the bridging group and the hydroxy substituent of each C₆ arylene group are disposed ortho, meta, or para (specifically para) to each other on the C₆ arylene group. The bridging group X^{a} can be a single bond, -O-, -S-, -S(O)-, -S(O)₂-, -C(O)-, or a C₁₋₁₈ organic bridging group. The C₁₋₁₈ organic bridging group can be cyclic or acyclic, aromatic or non-aromatic, and can further include heteroatoms such as halogens, oxygen, nitrogen, sulfur, silicon, or phosphorus. The C₁₋₁₈ organic group can be disposed such that the C₆ arylene groups connected thereto are each connected to a common alkylidene carbon or to different carbons of the C₁₋₁₈ organic bridging group. A specific example of a group Z is a divalent group of formula (3-1a) 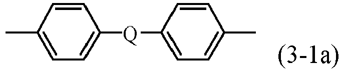 wherein Q is -O-, -S-, -C(O)-, -SO₂-, -SO-, -P(R^{a})(=O)- wherein R^{a} is a C₁₋₈ alkyl or C₆₋₁₂ aryl, or -C_{y}H_{2y}- wherein y is an integer from 1 to 5 or a halogenated derivative thereof (including a perfluoroalkylene group). In a specific embodiment Z is a derived from bisphenol A, such that Q in formula (3-1a) is 2,2-isopropylidene.

In an embodiment in formula (9), R is m-phenylene or p-phenylene and T is -O-Z-O- wherein Z is a divalent group of formula (3-1a). Alternatively, R is m-phenylene or p-phenylene and T is -O-Z-O wherein Z is a divalent group of formula (3-1a) and Q is 2,2-isopropylidene.

The polyetherimide blocks can be prepared by any of the methods well known to those skilled in the art, including the reaction of an aromatic bis(ether anhydride) of formula (9-1) with an organic diamine of formula (10-1)

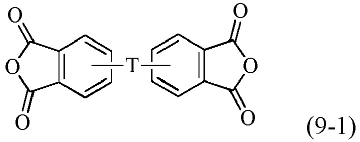

H₂N-R-NH₂ (10-1)

wherein T and R are defined as described above. Copolymers of the polyetherimides can be manufactured using a combination of an aromatic bis(ether anhydride) of formula (9-1) and a different bis(anhydride), for example a bis(anhydride) wherein T does not contain an ether functionality, for example T is a sulfone.

Illustrative examples of bis(ether anhydride)s of formula (9-1) and bis(anhydride)s include 3,3-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-(3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride; and, 4-(2,3-dicarboxyphenoxy)-4'-(3,4-dicarboxyphenoxy)diphenyl sulfone dianhydride, as well as various combinations including at least one of the foregoing.

Examples of organic diamines include hexamethylenediamine, polymethylated 1,6-n-hexanediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2, 2-dimethylpropylenediamine, N-methyl-bis (3-aminopropyl) amine, 3-methoxyhexamethylenediamine, 1,2-bis(3-aminopropoxy) ethane, bis(3-aminopropyl) sulfide, 1,4-cyclohexanediamine, bis-(4-aminocyclohexyl) methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylenediamine, 5-methyl-4,6-diethyl-1,3-phenylenediamine, benzidine, 3,3'-dimethylbenzidine, 3,3'-dimethoxybenzidine, 1,5-diaminonaphthalene, bis(4-aminophenyl) methane, bis(2-chloro-4-amino-3,5-diethylphenyl) methane, bis(4-aminophenyl) propane, 2,4-bis(p-amino-t-butyl) toluene, bis(p-amino-t-butylphenyl) ether, bis(p-methyl-o-aminophenyl) benzene, bis(p-methyl-o-aminopentyl) benzene, 1, 3-diamino-4-isopropylbenzene, bis(4-aminophenyl) sulfide, bis-(4-aminophenyl) sulfone (also known as 4,4'-diaminodiphenyl sulfone (DDS)), and bis(4-aminophenyl) ether. Any regioisomer of the foregoing compounds can be used. Combinations of these compounds can also be used. In some embodiments the organic diamine is m-phenylenediamine, p-phenylenediamine, 4,4'-diaminodiphenyl sulfone, or a combination including at least one of the foregoing.

The siloxane blocks of the poly(ether imide-siloxane) copolymers contain units of formula (11-1) 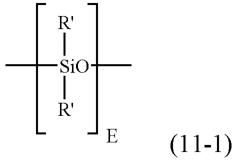 wherein E has an average value of 2 to 100, 2 to 31, 5 to 75, 5 to 60, 5 to 15, or 15 to 40, and each R' is independently a C₁₋₁₃ monovalent hydrocarbyl group. For example, each R' can independently be a C₁₋₁₃ alkyl group, C₁₋₁₃ alkoxy group, C₂₋₁₃ alkenyl group, C₂₋₁₃ alkenyloxy group, C₃₋₆ cycloalkyl group, C₃₋₆ cycloalkoxy group, C₆₋₁₄ aryl group, C₆₋₁₀ aryloxy group, C₇₋₁₃ arylalkyl group, C₇₋₁₃ arylalkoxy group, C₇₋₁₃ alkylaryl group, or C₇₋₁₃ alkylaryloxy group. The foregoing groups can be fully or partially halogenated with fluorine, chlorine, bromine, or iodine, or a combination including at least one of the foregoing. In an embodiment no bromine or chlorine is present, and in another embodiment no halogens are present. Combinations of the foregoing R groups can be used in the same copolymer. In an embodiment, the polysiloxane blocks includes R' groups that have minimal hydrocarbon content. In a specific embodiment, an R' group with a minimal hydrocarbon content is a methyl group.

The poly(ether imide siloxane) copolymers can be formed by polymerization of an aromatic bis(ether anhydride) (5) and a diamine component including an organic diamine (10-1) as described above or mixture of diamines, and a polysiloxane diamine of formula (12-1) 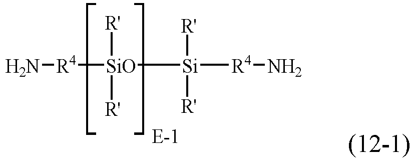 wherein R' and E are as described in formula (11-1), and each R₄ is independently a C₂-C₂₀ hydrocarbon moiety, in particular a C₂-C₂₀ arylene, alkylene, or arylenealkylene group. In an embodiment R⁴ is a C₂-C₂₀ alkylene group, specifically a C₂-C₁₀ alkylene group such as propylene, and E has an average value of 5 to 100, 5 to 75, 5 to 60, 5 to 15, or 15 to 40. Procedures for making the polysiloxane diamines of formula (10-1) are well known in the art.

In some poly(ether imide siloxane) copolymers the diamine component used in the manufacture of the copolymers can contain 10 to 90 mole percent (mol %), or 20 to 50 mol%, or 25 to 40 mol% of polysiloxane diamine (10-1) and 10 to 90 mol%, or 50 to 80 mol%, or 60 to 75 mol% of diamine (10-1), for example as described in US Patent 4,404,350. The diamine components can be physically mixed prior to reaction with the bisanhydride(s), thus forming a substantially random copolymer. Alternatively, block or alternating copolymers can be formed by selective reaction of (10-1) and (12-1) with aromatic bis(ether anhydrides (9), to make polyimide blocks that are subsequently reacted together. Thus, the poly(siloxane-imide) copolymer can be a block, random, or graft copolymer. Block poly(ether imide siloxane) copolymers include etherimide blocks and siloxane blocks in the polymer backbone. The etherimide blocks and the siloxane blocks can be present in random order, as blocks (i.e., AABB), alternating (i.e., ABAB), or a combination thereof. Graft poly(ether imide siloxane) copolymers are non-linear copolymers including the siloxane blocks connected to linear or branched polymer backbone including etherimide blocks.

Examples of specific poly(ether imide siloxane)s are described in US Pat. Nos. 4,404,350, 4,808,686 and 4,690,997. In an embodiment, the poly(ether imide siloxane) has units of formula (13) 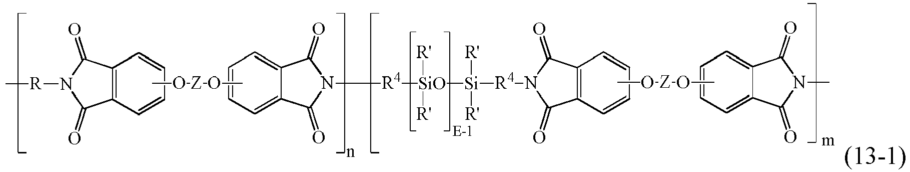 wherein R' and E of the siloxane are as in formula (11-1), R and Z of the imide are as in formula (7), R⁴ is as in formula (12-1), and n and m are each integers greater than 0, and the sum of n and m is 5 to 100. In a specific embodiment, the R is a phenylene, Z is a residue of bisphenol A, R⁴ is n-propylene, E is 2 to 50, 5 to 30, or 10 to 40, n+m is 5 to 100, and each R' of the siloxane is methyl.

The relative amount of polysiloxane units and etherimide units in the poly(ether imide siloxane) depends on the desired properties, and are selected using the guidelines provided herein. In particular, the poly(ether imide siloxane) copolymer is selected to have a certain average value of E, and is selected and used in amount effective to provide the desired weight percent (wt%) of siloxane units in the thermoplastic composition. In an embodiment the poly(ether imide siloxane) includes 5 to 50 wt%, 10 to 40 wt%, or 20 to 35 wt% siloxane units, based on the total weight of the poly(ether imide siloxane). In some embodiments the polysiloxane block of the copolymer has a number average molecular weight (Mn) of 300 to 3000 g/mol.

The polyetherimides can have a melt index of 0.1 to 10 grams per minute (g/min), as measured by American Society for Testing Materials (ASTM) D1238 at 340 to 370 °C, using a 6.7 kilogram (kg) weight. In some embodiments, the polyetherimide polymer has a weight average molecular weight (Mw) of 1,000 to 150,000 g/mol, or 10,000 to 80,000 g/mol, as measured by gel permeation chromatography, using polystyrene standards. Such polyetherimide polymers typically have an intrinsic viscosity greater than 0.2 deciliters per gram (dl/g), or, more specifically, 0.35 to 0.7 dl/g as measured in m-cresol at 25 °C. The poly(etherimide-siloxane) copolymer can have a number average molecular weight (Mn) of 5,000 to 50,000 g/mol, or 10,000 to 30,000 g/mol.

The polycarbonate compositions can include a combination of two or more poly(etherimide-siloxane) copolymers. The copolymers can be used in any proportion. For example, when two copolymers are used the weight ratio of the first copolymer to the second copolymer can be 1:99 to 99:1. Ternary blends and higher are also contemplated.

In addition to a poly(etherimide-siloxane), the siloxane component may further include a poly(carbonate-siloxane), also referred to in the art as a polycarbonate-polysiloxane copolymer. The polysiloxane blocks include repeating diorganosiloxane units as in formula (11-2) 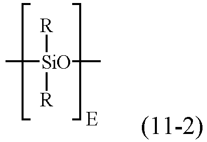 wherein each R is independently a C₁₋₁₃ monovalent organic group. For example, R may be a C₁-₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkylene, C₇₋₁₃ arylalkylenoxy, C₇₋₁₃ alkylarylene, or C₇₋₁₃ alkylaryleneoxy. The foregoing groups may be fully or partially halogenated with fluorine, chlorine, bromine, or iodine, or a combination thereof. In an aspect, where a transparent poly(carbonate-siloxane) is desired, R is unsubstituted by halogen. Combinations of the foregoing R groups may be used in the same copolymer.

The value of E in formula (11-2) may vary widely depending on the type and relative amount of each component in the polycarbonate composition, the desired properties of the composition, and like considerations. Generally, E has an average value of 2 to 1,000, preferably 2 to 500, 2 to 200, or 2 to 125, 5 to 80, or 10 to 70. In an aspect, E has an average value of 10 to 80 or 10 to 40, and in still another aspect, E has an average value of 40 to 80, or 40 to 70. Where E is of a lower value, e.g., less than 40, it may be desirable to use a relatively larger amount of the poly(carbonate-siloxane) copolymer. Conversely, where E is of a higher value, e.g., greater than 40, a relatively lower amount of the poly(carbonate-siloxane) copolymer may be used. A combination of a first and a second (or more) poly(carbonate-siloxane) copolymers may be used, wherein the average value of E of the first copolymer is less than the average value of E of the second copolymer.

In an aspect, the polysiloxane blocks are of formula (12-2) 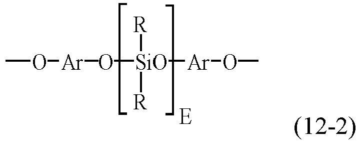 wherein E and R is each as defined if formula (11-2); each R may be the same or different, and is as defined above; and Ar may be the same or different, and is a substituted or unsubstituted C₆₋₃₀ arylene, wherein the bonds are directly connected to an aromatic moiety. Ar groups in formula (12-2) may be derived from a C₆₋₃₀ dihydroxyarylene compound, for example a dihydroxyarylene compound of formula (3) or (6). Dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane.

In another aspect, polysiloxane blocks are of formula (13-2) 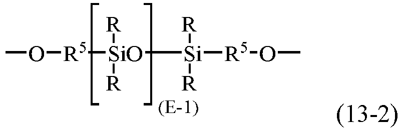 wherein Rand E are as described above, and each R⁵ is independently a divalent C₁₋₃₀ organic group, and wherein the polymerized polysiloxane unit is the reaction residue of its corresponding dihydroxy compound. In a specific aspect, the polysiloxane blocks are of formula (14): 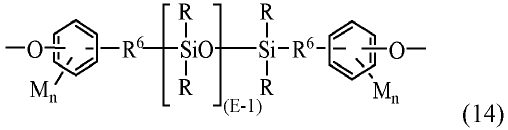 wherein Rand E are as defined above. R⁶ in formula (14) is a divalent C₂₋₈ aliphatic group. Each M in formula (14) may be the same or different, and may be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkylaryl, or C₇₋₁₂ alkylaryloxy, wherein each n is independently 0, 1, 2, 3, or 4.

In an aspect, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another aspect, R is methyl, or a combination of methyl and trifluoropropyl, or a combination of methyl and phenyl. In still another aspect, R is methyl, M is methoxy, n is one, and R⁶ is a divalent C₁₋₃ aliphatic group. Specific polysiloxane blocks are of the formula 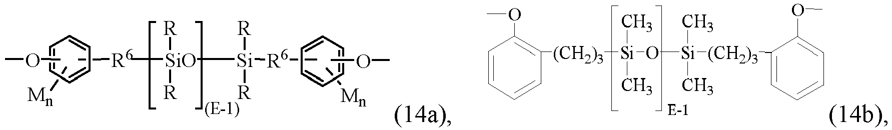 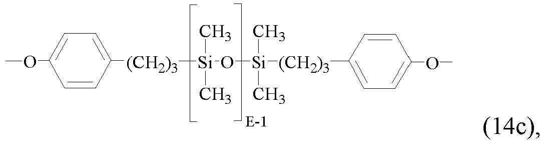 or a combination thereof, wherein E has an average value of 2 to 200, 2 to 125, 5 to 125, 5 to 100, 5 to 50, 20 to 80, or 5 to 20.

Blocks of formula (14) may be derived from the corresponding dihydroxy polysiloxane, which in turn may be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane) copolymers may then be manufactured, for example, by the synthetic procedure of European Patent Application Publication No. 0 524 731 A1 of Hoover, page 5, Preparation 2.

In an aspect, a blend is used, in particular a blend of a bisphenol A homopolycarbonate and a poly(carbonate-siloxane) block copolymer of bisphenol A blocks and eugenol capped polydimethylsiloxane blocks, of the formula 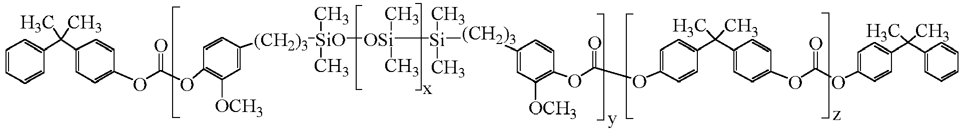 wherein x is 1 to 200, preferably 5 to 85, preferably 10 to 70, preferably 15 to 65, and more preferably 40 to 60; x is 1 to 500, or 10 to 200, and z is 1 to 1000, or 10 to 800. In an aspect, x is 1 to 200, y is 1 to 90 and z is 1 to 600, and in another aspect, x is 30 to 50, y is 10 to 30 and z is 45 to 600. The polysiloxane blocks may be randomly distributed or controlled distributed among the polycarbonate blocks.

Poly(carbonate-siloxane)s may have a weight average molecular weight of 2,000 to 100,000 g/mol, preferably 5,000 to 50,000 g/mol as measured by gel permeation chromatography using a crosslinked styrene-divinyl benzene column, at a sample concentration of 1 milligram per milliliter, using polystyrene standards and calculated for polycarbonate.

The poly(carbonate-siloxane)s may have a melt volume flow rate, measured at 300°C/1.2 kg, of 0.1 to 50 cubic centimeters per 10 minutes (cc/10 min), preferably 2 to 30 cc/10 min. Combinations of the poly(carbonate-siloxane)s of different flow properties may be used to achieve the overall desired flow property.

The poly(carbonate-siloxane) copolymers may include 50 to 99 wt% of carbonate units and 1 to 50 wt% siloxane units. Within this range, the poly(carbonate-siloxane) copolymer may include 70 to 98 wt%, more preferably 75 to 97 wt% of carbonate units and 2 to 30 wt%, more preferably 3 to 25 wt% siloxane units.

The poly(carbonate-siloxane) copolymers may include 30 to 70 wt% siloxane units and 30 to 70 wt% carbonate units. Within this range, the poly(carbonate-siloxane) copolymer may include 35-55 wt%, or 35-50 wt% siloxane units.

The polycarbonate compositions may include a combination of poly(carbonate-siloxane) copolymers. In some aspects, in addition to a poly(carbonate-siloxane) copolymer including 30 to 70 wt% siloxane units, the polycarbonate compositions may include a polycarbonate siloxane) including less than 10 wt% siloxane repeating units, a polycarbonate siloxane) including 10 wt% to less than 30 wt% siloxane repeating units, or a combination thereof.

The siloxane copolymer(s) of the siloxane component may be present in an amount effective to provide up to 25 wt% siloxane repeating units, based on the total composition. Within this range, the siloxane copolymer(s) may be present in an amount effective to provide up to 11 wt% siloxane repeating units, each based on the total composition. The poly(etherimide-siloxane) may be present in an amount effective to provide up to 5 wt%, 1-5 wt%, 1-4 wt%, 1-3 wt%, 1-2.5 wt%, or 1-2 wt% siloxane repeating units, each based on the total composition. When the siloxane component includes a combination of a poly(etherimide-siloxane) and a poly(carbonate siloxane), the poly(etherimide-siloxane) may be present in the amounts recited above and the poly(carbonate siloxane) may be present in an amount effective to provide up to 6 wt%, 0.5-6 wt%, 1-6 wt%, or 1-5 wt% siloxane repeating units, each based on the total composition. In some aspects, the siloxane component includes a combination of a poly(etherimide-siloxane) present in an amount effective to provide up to 5 wt% siloxane repeating units and a poly(carbonate siloxane) present in an amount effective to provide up to 6 wt% siloxane repeating units. In some aspects, the siloxane component includes a combination of a poly(etherimide-siloxane) present in an amount effective to provide up to 15 wt% siloxane repeating units and a polycarbonate siloxane) including 30-70 wt% siloxane repeating units present in an amount effective to provide up to 10 wt% siloxane repeating units.

In an aspect, one or both of the polycarbonate and the poly(carbonate-siloxane) may be derived from post-consumer recycled or post-industrial recycled materials, provided that the post-consumer recycled or post-industrial recycled materials include very low levels of fluorine or are fluorine-free, such that the polycarbonate compositions include 1500 ppm or less added fluorine content. In an aspect, one or both of the polycarbonate and the poly(carbonate-siloxane) may be produced from at least one monomer derived from bio-based or plastic waste feedstock. ("PCR-PC"). PCR-PC is derived or recycled from polycarbonate as described herein. PCR-PC may be recovered from a source after consumption. In addition, PCR-PC may be recovered from post-consumer sources including, but not limited to, household appliance waste such as TV, air conditioner, washing machine, refrigerator, etc. Regardless of the source, the recovered polycarbonate component may be similar or even identical to the chemical composition of the corresponding original polycarbonate. In one example, the polycarbonate may be derived from an optical disc. In another example, the PCR-PC may be derived from a plastic bottle, such as a plastic beverage bottle. In contrast, virgin polycarbonate polymers refer to polycarbonate polymers produced directly from petrochemical feedstocks, such as natural gas or crude oil, which have never been used or processed before.

One possible difference between the original polycarbonate component used in the polycarbonate composition and the PCR-PC is the presence of at least one impurity that is not present in the original material. For example, one or more additives conventionally used in the manufacture of impact modified thermoplastics may be present as impurities. Additional impurities may include processing residues such as lubricants, mold release agents, antistatic agents, stabilizers, light stabilizers, flame retardants, metals (e.g., iron, aluminum, and copper). In addition, impurities may include polyurethane particles that cannot be completely removed during the recovery process. In some aspects, the level of impurities in the PCR-PC is less than about 5 wt%, or in other aspects less than about 3 wt%, or in other aspects less than about 2 wt%. If present, the impurities do not significantly affect the properties of the compositions described herein.

Polycarbonates can be manufactured by processes such as interfacial polymerization and melt polymerization, which are known, and are described, for example, in WO 2013/175448 A1 and WO 2014/072923 A1. An end-capping agent (also referred to as a chain stopper agent or chain terminating agent) can be included during polymerization to provide end groups, for example monocyclic phenols such as phenol, p-cyanophenol, and C₁₋₂₂ alkyl-substituted phenols such as p-cumyl-phenol, resorcinol monobenzoate, and p-and tertiarybutyl phenol, monoethers of diphenols, such as p-methoxyphenol, monoesters of diphenols such as resorcinol monobenzoate, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used. Branched polycarbonate blocks can be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents can be added at a level of 0.05 to 2.0 wt. %. Combinations including linear polycarbonates and branched polycarbonates can be used.

The polycarbonate compositions may include nitrile-containing aromatic copolymers. Copolymers of this type are "free" nitrile-containing aromatic copolymers that are not grafted onto another polymeric chain, such as the nitrile-containing aromatic copolymers present in the elastomeric phase of impact modifiers. Nitrile-containing aromatic copolymers include ABS (derived from acrylonitrile, butadiene, and styrene), SAN (derived from styrene and acrylonitrile), or a combination thereof. In addition to the ABS and/or SAN copolymers, the polycarbonate compositions may include nitrile-containing aromatic copolymers different from ABS and SAN. Generally, nitrile-containing aromatic copolymers include structural units derived from at least one ethylenically unsaturated nitrile and at least one vinyl aromatic compound. The vinyl aromatic compounds can include monomers of formula (18): 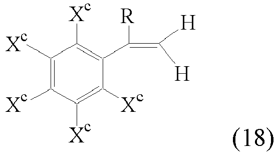 wherein each X^{c} is independently hydrogen, C₁₋₁₂ alkyl, C₃₋₁₂ cycloalkyl, C₆₋₁₂ aryl, C₇₋₁₂ aralkyl, C₇₋₁₂ alkylaryl, C₁₋₁₂ alkoxy, C₃₋₁₂ cycloalkoxy, C₆₋₁₂ aryloxy, chloro, bromo, or hydroxy, and R is hydrogen, C₁₋₅ alkyl, bromo, or chloro. monovinylaromatic monomers that can be used include styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, and the like, or a combination thereof.

The ethylenically unsaturated nitrile can be of formula (19) 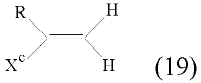 wherein R is hydrogen, C₁₋₅ alkyl, bromo, or chloro, and X^{c} is cyano. In addition to the at least one ethylenically unsaturated nitrile and at least one vinyl aromatic compound, the nitrile-containing aromatic copolymer may be derived from an ethylenically unsaturated monomer of formula (19) wherein R is hydrogen, C₁₋₅ alkyl, bromo, or chloro and X^{c} is C₁₋₁₂ alkoxycarbonyl, C₁₋₁₂ aryloxycarbonyl, hydroxy carbonyl, or the like. Examples of monomers of formula (19) include acrylonitrile, methacrylonitrile, alpha-chloroacrylonitrile, beta-chloroacrylonitrile, alpha-bromoacrylonitrile, acrylic acid, methyl (meth)acrylate, ethyl (meth)acrylate, n-butyl (meth)acrylate, t-butyl (meth)acrylate, n-propyl (meth)acrylate, isopropyl (meth)acrylate, 2-ethylhexyl (meth)acrylate, and the like, and a combination thereof. Monomers such as n-butyl acrylate, ethyl acrylate, and 2-ethylhexyl acrylate are commonly used as monomers copolymerizable with the conjugated diene monomer. Combinations of the foregoing monovinyl monomers and monovinylaromatic monomers can also be used.

The nitrile-containing aromatic copolymers may further include blocks derived from conjugated diene monomers of formula (17) 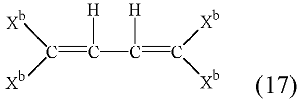 wherein each X^{b} is independently hydrogen, C₁₋₅ alkyl, or the like. Examples of conjugated diene monomers that can be used are butadiene, isoprene, 1,3-heptadiene, methyl-1,3-pentadiene, 2,3-dimethyl-1,3-butadiene, 2-ethyl-1,3-pentadiene; 1,3- and 2,4-hexadienes, and the like, as well as a combination thereof. Specific conjugated diene blocks include polybutadiene and polyisoprene.

Suitable nitrile-containing aromatic copolymers in addition to SAN and ABS include α-methylstyrene-acrylonitrile copolymers, acrylonitrile-styrene-methacrylic acid ester terpolymers, acrylonitrile-ethyl acrylate-styrene copolymers and rubber-modified acrylonitrile-styrene-butyl acrylate polymers.

The weight average molecular weight of the nitrile containing copolymer can be 30,000 to 150,000 g/mol, specifically 40,000 to 100,000 g/mol, more specifically 50,000 to 90,000 g/mol, as determined by GPC relative to polystyrene standards. The nitrile containing copolymers including ABS and/or SAN can include various proportions of vinyl aromatic compound to ethylenically unsaturated nitrile. For example, nitrile containing copolymer can include 75 wt% vinyl aromatic compound and 25 wt% ethylenically unsaturated nitrile based on the total weight of the nitrile containing copolymer. In some aspects, the nitrile containing copolymer may include 5 wt% to 30 wt% ethylenically unsaturated nitrile by weight of the nitrile containing copolymer, for example, 10 wt% to 25 wt% ethylenically unsaturated nitrile, or 16 wt% to 28 wt% ethylenically unsaturated nitrile. In a particular aspect, nitrile containing copolymer includes 75 wt% vinyl aromatic compound and 25 wt% ethylenically unsaturated nitrile based on the total weight of the nitrile containing copolymer. In some aspects, nitrile containing copolymer may include not more than 28 wt% ethylenically unsaturated nitrile, or not more than 25 wt% acrylonitrile.

The polycarbonate compositions include up to 15 wt%, up to 12 wt%, up to 10 wt%, 2-15 wt%, 2-12 wt%, or 2-10 wt% of the nitrile-containing aromatic copolymers. When ABS and SAN are both present, they can be present in any ratio including 1:9 to 9:1, 1:5 to 5:1, 1:4 to 4:1, 1:3 to 3:1, 1:2 to 2:1, or about 1:1.

The polycarbonate compositions may also include blends of a polycarbonate with a poly(alkylene ester), such as, for example, poly(alkylene arylates) and/or poly(cycloalkylene diesters). Aromatic polyesters may have a polyester structure according to formula (7-1) 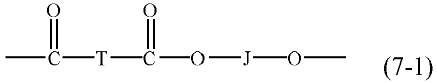 wherein J is a divalent group derived from a dihydroxy compound (including a reactive derivative thereof), and can be, for example, a C₁₋₁₀ alkylene, a C₆₋₂₀ cycloalkylene, a C₅₋₂₀ arylene, or a polyoxyalkylene in which the alkylene groups contain 2 to 6 carbon atoms, preferably 2, 3, or 4 carbon atoms; and T is a divalent group derived from a dicarboxylic acid (including a reactive derivative thereof), and can be, for example, a C₂₋₂₀ alkylene, a C₅₋₂₀ cycloalkylene, or a C₆₋₂₀ arylene. Copolyesters containing a combination of different T or J groups can be used. The polyester units can be branched or linear.

In an aspect, J is a C₂₋₃₀ alkylene group having a straight chain, branched chain, or cyclic (including polycyclic) structure, for example ethylene, n-propylene, i-proplyene, 1,4-butylene, 1,4-cyclohexylene, or 1,4-methylenecyclohexane. In another aspect, J is derived from a bisphenol of formula (3), e.g., bisphenol A. In another aspect, J is derived from an aromatic dihydroxy compound of formula (6), e.g, resorcinol.

Aromatic dicarboxylic acids that can be used to prepare the polyester units include isophthalic or terephthalic acid, 1,2-di(p-carboxyphenyl)ethane, 4,4'-dicarboxydiphenyl ether, 4,4'-bisbenzoic acid, or a combination thereof. Acids containing fused rings can also be present, such as in 1,4-, 1,5-, or 2,6-naphthalenedicarboxylic acids. Specific dicarboxylic acids include terephthalic acid, isophthalic acid, naphthalene dicarboxylic acid, 1,4-cyclohexane dicarboxylic acid, or a combination thereof. A specific dicarboxylic acid includes a combination of isophthalic acid and terephthalic acid wherein the weight ratio of isophthalic acid to terephthalic acid is 91:9 to 2:98.

Specific ester units include ethylene terephthalate, n-propylene terephthalate, n-butylene terephthalate, 1,4-cyclohexanedimethylene terephthalate, and ester units derived from isophthalic acid, terephthalic acid, and resorcinol (ITR)).

Poly(alkylene arylates) may have a polyester structure according to formula (7-1), wherein T includes groups derived from aromatic dicarboxylates, cycloaliphatic dicarboxylic acids, or derivatives thereof. Examples of preferably useful T groups include 1,2-, 1,3-, and 1,4-phenylene; 1,4- and 1,5- naphthylenes; cis- or trans-1,4-cyclohexylene; and the like. Preferably, where T is 1,4-phenylene, the poly(alkylene arylate) is a poly(alkylene terephthalate). In addition, for poly(alkylene arylate), preferably useful alkylene groups J include, for example, ethylene, 1,4-butylene, and bis-(alkylene-disubstituted cyclohexane) including cis- or trans-1,4-(cyclohexylene)dimethylene. Examples of poly(alkylene terephthalates) include polyethylene terephthalate) (PET), poly(1,4-butylene terephthalate) (PBT), and poly(n-propylene terephthalate) (PPT). Also useful are poly(alkylene naphthoates), such as poly(ethylene naphthanoate) (PEN), and poly(butylene naphthanoate) (PBN). A preferably useful poly(cycloalkylene diester) is poly(1,4-cyclohexanedimethylene terephthalate) (PCT). Combinations including at least one of the foregoing polyesters may also be used.

Copolymers including alkylene terephthalate repeating ester units with other ester groups may also be useful. Preferably useful ester units may include different alkylene terephthalate units, which may be present in the polymer chain as individual units, or as blocks of poly(alkylene terephthalates). Copolymers of this type include poly(cyclohexanedimethylene terephthalate)-co-poly(ethylene terephthalate), abbreviated as PETG where the polymer includes greater than or equal to 50 mol% of poly(ethylene terephthalate), and abbreviated as PCTG where the polymer includes greater than 50 mol% of poly(1,4-cyclohexanedimethylene terephthalate).

Poly(cycloalkylene diester)s may also include poly(alkylene cyclohexanedicarboxylate)s. Of these, a specific example is poly(1,4-cyclohexane-dimethanol-1,4-cyclohexanedicarboxylate) (PCCD), having recurring units of formula 31) 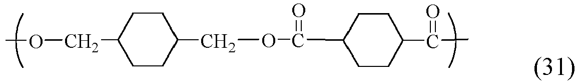 wherein, as described using formula (7-1), J is a 1,4-cyclohexanedimethylene group derived from 1,4-cyclohexanedimethanol, and T is a cyclohexane ring derived from cyclohexanedicarboxylate or a chemical equivalent thereof, and may include the cis-isomer, the trans-isomer, or a combination thereof.

The polyesters can be obtained by interfacial polymerization or melt-process condensation as described above, by solution phase condensation, or by transesterification polymerization wherein, for example, a dialkyl ester such as dimethyl terephthalate can be transesterified with ethylene glycol using acid catalysis, to generate poly(ethylene terephthalate). A branched polyester, in which a branching agent, for example, a glycol having three or more hydroxyl groups or a trifunctional or multifunctional carboxylic acid has been incorporated, can be used. Furthermore, it can be desirable to have various concentrations of acid and hydroxyl end groups on the polyester, depending on the ultimate end use of the composition.

In some aspects, the poly(alkylene ester) may be present at 40 wt% or less, 35 wt% or less, 30 wt% or less, 25 wt% or less, or 20 wt% or less, based on the total composition.

The polycarbonate compositions include a non-fluorinated flame retardant. In an exemplary aspect, the polycarbonate compositions avoid the use of fluorinated flame retardants such as Rimar (potassium perfluorobutane sulfonate) salt. In some aspects, the polycarbonate compositions avoid the use of halogenated flame retardants such as brominated polycarbonate. Inorganic flame retardants may be used, for example salts of aromatic sulfonates such as sodium benzene sulfonate, sodium toluene sulfonate (NATS), and the like, salts of aromatic sulfone sulfonates such as potassium diphenylsulfone sulfonate (KSS), and the like; salts formed by reacting for example an alkali metal or alkaline earth metal (e.g., lithium, sodium, potassium, magnesium, calcium and barium salts) and an inorganic acid complex salt, for example, an oxo-anion (e.g., alkali metal and alkaline-earth metal salts of carbonic acid, such as Na₂CO₃, K₂CO₃, MgCO₃, CaCO₃, and BaCO₃, KSS and NATS, alone or in combination with other flame retardants, are particularly useful. Exemplary amounts of non-fluorinated flame retardant may be 0.01 to 1.0 wt%, or 0.1 to 0.6 wt%, based on the total weight of the polycarbonate composition.

The polycarbonate compositions may include an organophosphorus flame retardant as a non-fluorinated flame retardant. In the aromatic organophosphorus compounds that have at least one organic aromatic group, the aromatic group may be a substituted or unsubstituted C₃₋₃₀ group containing one or more of a monocyclic or polycyclic aromatic moiety (which may optionally contain with up to three heteroatoms (N, O, P, S, or Si)) and optionally further containing one or more nonaromatic moieties, for example alkyl, alkenyl, alkynyl, or cycloalkyl. The aromatic moiety of the aromatic group may be directly bonded to the phosphorus-containing group, or bonded via another moiety, for example an alkylene group. The aromatic moiety of the aromatic group may be directly bonded to the phosphorus-containing group, or bonded via another moiety, for example an alkylene group. In an aspect the aromatic group is the same as an aromatic group of the polycarbonate backbone, such as a bisphenol group (e.g., bisphenol A), a monoarylene group (e.g., a 1,3-phenylene or a 1,4-phenylene), or a combination including at least one of the foregoing.

The phosphorus-containing group may be a phosphate (P(=O)(OR)₃), phosphite (P(OR)₃), phosphonate (RP(=O)(OR)₂), phosphinate (R₂P(=O)(OR)), phosphine oxide (R₃P(=O)), or phosphine (R₃P), wherein each R in the foregoing phosphorus-containing groups may be the same or different, provided that at least one R is an aromatic group. A combination of different phosphorus-containing groups may be used. The aromatic group may be directly or indirectly bonded to the phosphorus, or to an oxygen of the phosphorus-containing group (i.e., an ester).

The organophosphorus flame retardant may include an oxaphosphorinoxide of the Formula (23) below.

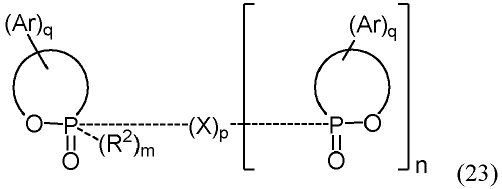

In Formula (23), the phosphorus atom and one oxygen atom are part of a cyclic structure, for example, a five or six membered ring and q is at least two. Each Ar is independently C₆₋₁₈ aryl, preferably benzene, which is optionally substituted with a C₁₋₁₈ hydrocarbyl group, or a C₁₋₁₈ hydrocarbyloxy group (e.g., -O-hydrocarbyl). When n and p are each 0 and m is 1 ("mono-DOPO" type compounds), then R² is hydrogen, C₁-C₁₈ alkyl, C₃₋₁₀ cycloalkyl, (C₁₋₆ alkyl)C₃₋₁₀ cycloalkyl, C₆₋₁₈ aryl, (C₁₋₆ alkyl)C₆₋₁₈ aryl, C₃₋₁₂ heteroaryl, or (C₁₋₆ alkyl)C₃₋₁₂ heteroaryl. In the foregoing groups at least one hydrogen atom of these groups may be substituted with a group having an N, S, O, or F atom. As used herein, "(C₁₋₆ alkyl)C₃₋₁₀ cycloalkyl" refers to a cycloalkyl group attached to an alkylene group, "(C₁₋₆ alkyl)C₆₋₁₈ aryl" refers to an aryl group attached to an alkylene group, and "(C₁₋₆ alkyl)C₃₋₁₂ heteroaryl" refers to a heteroaryl group attached to an alkylene group. In any of the alkyl or cycloalkyl groups of R², any carbon-carbon single bond is optionally replaced by a carbon-carbon double or triple bond, and any methylene is optionally replaced by O, S, S(=O), C(=O), P(=O), or NR¹⁰, wherein R¹⁰ is hydrogen or C₁₋₆ alkyl, and any methylene is optionally substituted with a group having an N, S, O, or F atom.

In Formula (23), when n and p are each 1 or more and m is 0 ("Di-DOPO" type compounds), then X is C₁-C₁₈ alkylidene, C₃₋₁₀ cycloalkylidene, C₆₋₁₈ arylene, C₃₋₁₂ heteroarylene, a group derived from Formula (3), or a group represented by -L¹-X'-L²-. The L¹ and L² linker groups are each independently a single bond, C₁-C₁₈ alkylidene, or a C₃₋₁₀ cycloalkylidene, where any carbon-carbon single bond is optionally replaced by a carbon-carbon double or triple bond, and any methylene is optionally replaced by O, S, S(=O), C(=O), P(=O), or NR¹⁰, wherein R¹⁰ is hydrogen or C₁₋₆ alkyl, and any methylene is optionally substituted with a group having an N, S, O, or F atom. X' is C₁-C₁₈ alkylidene, C₃₋₁₀ cycloalkylidene, C₆₋₁₈ arylene, C₃₋₁₂ heteroarylene, or a group derived from Formula (3).

Specific examples of an oxaphosphorinoxide include 9,10-dihydro-9-oxo-10-phosphaphenanthrene-10-oxide (23a, "DOPO"), commercially available as from SANKO CO., LTD., under the trade name Sanko-HCA, 3-(6-oxidodibenzo[c,e][1,2]oxaphosphinin-6-yl)propanamide (23b, "AAM-DOPO"), and 6-[(1-oxido-2,6,7-trioxa-1-phosphabicyclo[2.2.2.]oct-4-yl)methoxy-6-oxide (23c, "DOPO-PEPA").

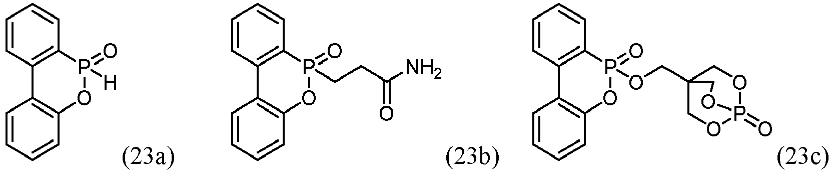

A specific formula for a Di-DOPO compound is Formula (24). 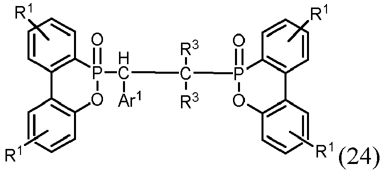 wherein Ar¹ is C₃₋₁₈ heteroaryl or C₆₋₁₈ aryl, each instance of R³ is independently hydrogen, C₁₋₁₈ alkyl, C₃₋₁₈ heteroaryl or C₆₋₁₈ aryl, each instance of R¹ is independently C₁₋₁₈ alkyl, C₃₋₁₈ heteroaryl or C₆₋₁₈ aryl, and any hydrogen atom on an aryl or heteroaryl ring may be optionally substituted with a C₁₋₁₈ alkyl group. An exemplary Di-DOPO compound is HTP-6123G, commercially available from GUIZHOU YUANYI MINING GROUP CO.

In an aspect, the aromatic organophosphorus compound is a monomeric phosphate. Representative monomeric aromatic phosphates are of the formula (GO)₃P=O, wherein each G is independently an alkyl, cycloalkyl, aryl, alkylarylene, or arylalkylene group having up to 30 carbon atoms, provided that at least one G is an aromatic group. Two of the G groups may be joined together to provide a cyclic group. In some aspects G corresponds to a monomer used to form the polycarbonate, e.g., resorcinol. Exemplary phosphates include phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, and the like. A specific aromatic phosphate is one in which each G is aromatic, for example, triphenyl phosphate, tricresyl phosphate, isopropylated triphenyl phosphate, and the like.

Di- or polyfunctional aromatic organophosphorus compounds are also useful, for example, compounds of the formulas 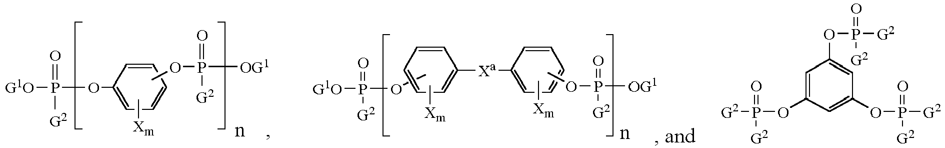 wherein each G¹ is independently a C₁₋₃₀ hydrocarbyl; each G² is independently a C₁₋₃₀ hydrocarbyl or hydrocarbyloxy; X^{a} is as defined in formula (3) or formula (4); each X is independently a bromine or chlorine; m is 0 to 4, and n is 1 to 30. In a specific aspect, X^{a} is a single bond, methylene, isopropylidene, or 3,3,5-trimethylcyclohexylidene.

Specific aromatic organophosphorus compounds are inclusive of acid esters of formula (9-P) 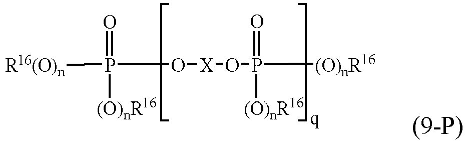 wherein each R¹⁶ is independently C₁₋₈ alkyl, C₅₋₆ cycloalkyl, C₆₋₂₀ aryl, or C₇₋₁₂ arylalkylene, each optionally substituted by C₁₋₁₂ alkyl, specifically by C₁₋₄ alkyl and X is a mono- or poly-nuclear aromatic C₆₋₃₀ moiety or a linear or branched C₂₋₃₀ aliphatic radical, which may be OH-substituted and may contain up to 8 ether bonds, provided that at least one R¹⁶ or X is an aromatic group; each n is independently 0 or 1; and q is from 0.5 to 30. In some aspects each R¹⁶ is independently C₁₋₄ alkyl, naphthyl, phenyl(C₁₋₄)alkylene, aryl groups optionally substituted by C₁₋₄ alkyl; each X is a mono- or poly-nuclear aromatic C₆₋₃₀ moiety, each n is 1; and q is from 0.5 to 30. In some aspects each R¹⁶ is aromatic, e.g., phenyl; each X is a mono- or poly-nuclear aromatic C₆₋₃₀ moiety, including a moiety derived from formula (2); n is one; and q is from 0.8 to 15. In other aspects, each R¹⁶ is phenyl; X is cresyl, xylenyl, propylphenyl, or butylphenyl, one of the following divalent groups 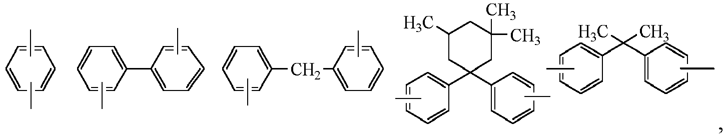 or a combination including one or more of the foregoing; n is 1; and q is from 1 to 5, or from 1 to 2. In some aspects at least one R¹⁶ or X corresponds to a monomer used to form the polycarbonate, e.g., bisphenol A, resorcinol, or the like. Aromatic organophosphorus compounds of this type include the bis(diphenyl) phosphate of hydroquinone, resorcinol bis(diphenyl phosphate) (RDP), and bisphenol A bis(diphenyl) phosphate (BPADP), and their oligomeric and polymeric counterparts.

The organophosphorus flame retardant containing a phosphorus-nitrogen bond may be a phosphazene, phosphonitrilic chloride, phosphorus ester amide, phosphoric acid amide, phosphonic acid amide, phosphinic acid amide, or tris(aziridinyl) phosphine oxide. These flame-retardant additives are commercially available. In an aspect, the organophosphorus flame retardant containing a phosphorus-nitrogen bond is a phosphazene or cyclic phosphazene of the formulas 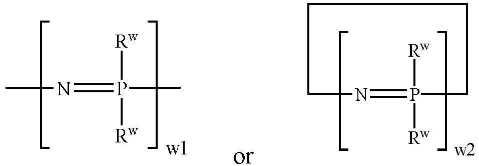 wherein w1 is 3 to 10,000; w2 is 3 to 25, or 3 to 7; and each R^{w} is independently a C₁₋₁₂ alkyl, alkenyl, alkoxy, aryl, aryloxy, or polyoxyalkylene group. In the foregoing groups at least one hydrogen atom of these groups may be substituted with a group having an N, S, O, or F atom, or an amino group. For example, each R^{w} may be a substituted or unsubstituted phenoxy, an amino, or a polyoxyalkylene group. Any given R^{w} may further be a crosslink to another phosphazene group. Exemplary crosslinks include bisphenol groups, for example bisphenol A groups. Examples include phenoxy cyclotriphosphazene, octaphenoxy cyclotetraphosphazene decaphenoxy cyclopentaphosphazene, and the like. In an aspect, the phosphazene has a structure represented by the formula

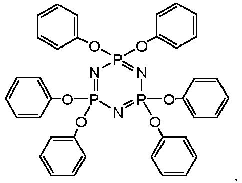

Commercially available phenoxyphosphazenes having the aforementioned structures are LY202 manufactured and distributed by Lanyin Chemical Co., Ltd, FP-110 manufactured and distributed by Fushimi Pharmaceutical Co., Ltd, and SPB-100 manufactured and distributed by Otsuka Chemical Co., Ltd.

When the flame retardant includes an organophosphorus flame retardant, the organophosphorus flame retardant may be present in an amount effective to provide 0.1 to 1.5 wt%, 0.3 to 1.5 wt%, 0.5 to 1.5 wt%, 0.1 to 1.0 wt%, 0.3 to 1.0 wt%, 0.5 to 1.0 wt% phosphorus, each based on the total weight of the composition.

The polycarbonate compositions minimize or eliminate conventional anti-drip agents, in particular fluorinated anti-drip agents. Anti-drip agents include, for example, a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. TSAN includes 50 wt% PTFE and 50 wt% SAN, based on the total weight of the encapsulated fluoropolymer. The SAN can include, for example, 75 wt% styrene and 25 wt% acrylonitrile based on the total weight of the copolymer. In some aspects, the fluorinated anti-drip agent is present in an amount effective to provide 0.12 wt% or less fluorine to the total composition. In some aspects, a fluorinated anti-drip agent is excluded from the flame retardant compositions of the polycarbonate compositions.

The polycarbonate compositions may include a reinforcing filler. Possible fillers or reinforcing agents include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, TiO₂, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well a combination thereof. The fillers and reinforcing agents can be coated with a layer of metallic material to facilitate conductivity, or surface treated with silanes to improve adhesion and dispersion with the polymer matrix. Fillers are used in amounts of 1 to 200 parts by weight, based on 100 parts by weight of based on 100 parts by weight of the total composition.

The reinforcing filler of the polycarbonate compositions may include glass fibers, which may be non-bonding glass fiber, bonding glass fiber, or a combination thereof.

A non-bonding glass fiber, also characterized as a non-binding glass fiber, may refer to a glass fiber filler that does not provide specific adhesion to a polymer resin to which it is added. That is, individual fibers of the glass fiber filler may not demonstrate an affinity towards the polymer matrix. Comparatively, bonding glass fiber provides specific adhesion with the specific polymer resin to which it is added. A bonding glass fiber filler may exhibit affinity toward the polycarbonate resin matrix. This affinity may be attributed to the glass sizing, among a number of other forces.

In one aspect, the disclosed compositions include a non-bonding glass fiber selected from E-glass, S-glass, AR-glass, T-glass, D-glass and R-glass. In a still further aspect, the non-bonding glass fiber may be selected from E-glass, S-glass, and combinations thereof. In one example, the non-bonding glass fiber is an E-glass or EC glass type.

The non-bonding glass fibers may be sized or unsized. Sized glass fibers are coated on their surfaces with a sizing composition selected for compatibility with the polycarbonate. The sizing composition facilitates wet-out and wet-through of the polycarbonate upon the fiber strands and assists in attaining desired physical properties in the polycarbonate composition. In various further aspects, the non-bonding glass fiber is sized with a coating agent. In a further aspect, the coating agent is present in an amount from about 0.1 wt % to about 5 wt % based on the weight of the glass fibers. In a still further aspect, the coating agent is present in an amount from about 0.1 wt % to about 2 wt % based on the weight of the glass fibers.

In preparing the glass fibers, a number of filaments can be formed simultaneously, sized with the coating agent and then bundled into what is called a strand. Alternatively the strand itself may be first formed of filaments and then sized. The amount of sizing employed is generally that amount which is sufficient to bind the glass filaments into a continuous strand and ranges from about 0.1 to about 5 wt %, about 0.1 to 2 wt % based on the weight of the glass fibers. Generally, this may be about 1.0 wt % based on the weight of the glass filament.

In a further aspect, the non-bonding glass fiber may be continuous or chopped. In some examples, the glass fiber is chopped. Glass fibers in the form of chopped strands may have a length of about 0.3 millimeter to about 10 centimeters, specifically about 0.5 millimeter to about 5 centimeters, and more specifically about 1.0 millimeter to about 2.5 centimeters. In various further aspects, the glass fiber has a length from about 0.2 mm to about 20 mm. In a yet further aspect, the glass fiber has a length from about 0.2 mm to about 10 mm. In an even further aspect, the glass fiber has a length from about 0.7 mm to about 7 mm. In this area, where a thermoplastic resin is reinforced with glass fibers in a composite form, fibers having a length of about 0.4 mm are generally referred to as long fibers, and shorter ones are referred to as short fibers. In a still further aspect, the glass fiber can have a length of 1 mm or longer. In yet a further aspect, the glass fiber can have a length of 2 mm or longer.

In an aspect, bonding glass fibers can outperform non-bonding glass fibers especially with respect to tensile strength, while modulus is also higher, without a significant drop in impact. Bonding glass fibers have a sizing onto the surface of the glass fibers to allow good coupling of the fibers to the thermoplastic matrix, and as such improve properties such as strength and stiffness. For instance, this can be achieved with a silane coating, which chemically bonds with the resin.

The glass fibers may be included in any amount so as to not significantly adversely affect the desired properties of the polycarbonate composition, in particular flame resistance. In some aspects, the glass fibers can be present from 5-45 wt%, 5-35 wt%, 5-30 wt%, or from 5-20 wt%, or from 5-15 wt%, or from 5-10 wt% based on the total weight of the polycarbonate composition, which sums to 100 wt%.

The polycarbonate composition may include various additives ordinarily incorporated into polymer compositions of this type, with the proviso that the additive(s) are selected so as to not significantly adversely affect the desired properties of the polycarbonate composition, in particular flame resistance, impact resistance and the melt volume rate. Such additives may be mixed at a suitable time during the mixing of the components for forming the composition. Additives include antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, and radiation stabilizers. The additive composition excludes flame retardants and anti-drip agents. A combination of additives may be used, for example a combination of a heat stabilizer, mold release agent, and ultraviolet light stabilizer. In general, the additives are used in the amounts generally known to be effective. For example, the total amount of the additives may be 0.01-10 wt%, 0.01-5 wt%, 0.01-2 wt%, or 0.01-1 wt%, each based on the total weight of the polycarbonate composition.

In some aspects, the polycarbonate compositions include: a polycarbonate, preferably a BPA homopolycarbonate; a siloxane component including a poly(etherimide-siloxane) and optionally, a polycarbonate siloxane); a flame retardant including a non-fluorinated flame retardant and optionally, an anti-drip agent; optionally, a reinforcing filler; and optionally, an additive composition, wherein the sum of the polycarbonate, the siloxane component, the flame retardant composition; and the optional additive composition total 100 wt%.

In some aspects, the polycarbonate compositions include: a polycarbonate, preferably a BPA homopolycarbonate; a nitrile-containing aromatic copolymer including acrylonitrile butadiene styrene copolymer, styrene acrylonitrile copolymer, or a combination thereof; a siloxane component including a poly(etherimide-siloxane) and optionally, a polycarbonate siloxane); a flame retardant composition including a non-fluorinated flame retardant and optionally, an anti-drip agent; optionally, a reinforcing filler; and optionally, an additive composition, wherein the sum of the polycarbonate the optional nitrile-containing aromatic copolymer, the siloxane component, the flame retardant composition; the optional reinforcing filler; and the optional additive composition total 100 wt%.

In some aspects, the polycarbonate compositions include: a polycarbonate, or a polycarbonate and poly(alkylene ester), preferably a poly(butylene terephthalate); optionally, a nitrile-containing aromatic copolymer including acrylonitrile butadiene styrene copolymer, styrene acrylonitrile copolymer, or a combination thereof; a siloxane component including a poly(etherimide-siloxane) and optionally, a polycarbonate siloxane); a flame retardant composition including a non-fluorinated flame retardant and optionally, an anti-drip agent; optionally, a reinforcing filler; and optionally, an additive composition, wherein the sum of the polycarbonate, the optional poly(alkylene ester), the optional nitrile-containing aromatic copolymer, the siloxane component, the flame retardant composition; the optional reinforcing filler; and the optional an additive composition total 100 wt%.

The polycarbonate compositions may have ultra-low halogen content. As used herein, "ultra-low chlorine and/or bromine content" refers to materials produced without the intentional addition of chlorine or bromine or chlorine or bromine containing materials. It is understood however that in facilities that process multiple products a certain amount of cross contamination may occur resulting in bromine or chlorine levels typically on the parts per million by weight scale. With this understanding it may be readily appreciated that "ultra-low chlorine or bromine content" may be defined as having a bromine or chlorine content of less than or equal to 100 parts per million by weight (ppm), less than or equal to 75 ppm, or less than or equal to 50 ppm. In some aspects, "ultra-low chlorine and bromine content" means a total bromine and chlorine content of less than or equal to 100 parts per million by weight, or less than or equal to 75 ppm, or less than or equal to 50 ppm. When this definition is applied to the flame retardant it is based on the total weight of the flame retardant. When this definition is applied to the polycarbonate composition it is based on the total parts by weight of the polycarbonate composition.

In another aspect, the polycarbonate composition may have an ultra-low chlorine, bromine, or fluorine content. As used herein, "ultra-low chlorine, bromine, or fluorine content" is defined as having a bromine, chlorine, or fluorine content of less than or equal to 100 ppm, less than or equal to 75 ppm, or less than or equal to 50 ppm, based on the total parts by weight of the composition. Preferably, the polycarbonate composition has a combined bromine, chlorine, and fluorine content of less than or equal to 100 ppm, less than or equal to 75 ppm, or less than or equal to 50 ppm, based on the total parts by weight of the composition.

In an aspect, the composition may also exhibit good flame retardancy. In an aspect of measuring flame retardance, the LTL-94 standard utilizes a rating of V0, V1, V2 or HB, wherein a rating of V0 is better than V1 or V2 and is required for many applications at the actual part thickness. Using this standard, the polycarbonate compositions are formed into a molded article having a given thickness. The thinner the article, the more difficult it is to achieve a rating of V0 or V1. In an aspect, a molded sample of the polycarbonate composition is capable of achieving a UL-94 V0 or V1 rating at a thickness of 1.5 mm or less, preferably a UL-94 rating of V0 at a thickness of less than or equal to 1.5 mm, for example, 1.2 mm, 1.0 mm, and 0.8 mm.

The polycarbonate composition may be manufactured by various methods known in the art. For example, powdered polymers and other optional components are first blended, optionally with any fillers, in a high-speed mixer or by hand mixing. The blend is then fed into the throat of a twin-screw extruder via a hopper. Alternatively, at least one of the components may be incorporated into the composition by feeding it directly into the extruder at the throat and/or downstream through a side stuffer, or by being compounded into a masterbatch with a desired polymer and fed into the extruder. The extruder is generally operated at a temperature higher than that necessary to cause the composition to flow. The extrudate may be immediately quenched in a water bath and pelletized. The pellets so prepared may be one-fourth inch long or less as desired. Such pellets may be used for subsequent molding, shaping, or forming.

Shaped, formed, or molded articles including the polycarbonate compositions are also provided. The polycarbonate compositions may be molded into useful shaped articles by a variety of methods, such as injection molding, extrusion, rotational molding, blow molding and thermoforming. Some examples of articles include computer and business machine housings such as housings for monitors, handheld electronic device housings such as housings for cell phones, electrical connectors, and components of lighting fixtures, ornaments, home appliances, roofs, greenhouses, sun rooms, swimming pool enclosures, and the like. In an aspect, the article is an extruded article, a molded article, pultruded article, a thermoformed article, a foamed article, a layer of a multi-layer article, a substrate for a coated article, a substrate for a metallized article, or a thin film. In addition, the polycarbonate compositions may be used for such applications as a molded housing and other devices such as electrical circuit housing.

Thin films including the polycarbonate compositions are also provided. The thin films can be prepare The thin film of the polycarbonate composition can be prepared by extrusion of the polycarbonate composition. The thin films may have improved thermal resistance. In some aspects, the thin films may be transparent.

This disclosure is further illustrated by the following examples, which are nonlimiting.

### PROPHETIC EXAMPLES

The following components are used in the examples. Unless specifically indicated otherwise, the amount of each component is in wt%, based on the total weight of the composition.

The materials shown in Table 1 were used.

**Table 1.**

| | | |
|---|---|---|
| PC-1 | Linear poly(bisphenol A carbonate), CAS Reg. No, 25971-63-5, Mw = 30,000-31,000 g/mol per gel permeation chromatography (GPC) using bisphenol A homopolycarbonate standards | SABIC |
| PBT-1 | Poly(1,4-butylene terephthalate), CAS Reg. No. 26062-94-2, having an intrinsic viscosity of 1.2 deciliters/gram as measured at 30°C in a 1:1 (w/w) solution of phenol: 1,1,2,2-tetrachloro ethane, and having 38 meq/kg of COOH; obtained as VALOX^{™} 315 | SABIC |
| PBT-2 | Poly(1,4-butylene terephthalate), CAS Reg. No. 26062-94-2, having an intrinsic viscosity of 0.70 deciliters/gram as measured at 30°C in a 1:1 (w/w) solution of phenol: 1,1,2,2-tetrachloro ethane, and having 17 meq/kg of COOH; obtained as VALOX^{™} 195 | SABIC |
| PC-Si-40 | PDMS (polydimethylsiloxane)-Bisphenol A polycarbonate copolymer, 40 wt% siloxane, average PDMS block length of 45 units, having a Mw of 37,000 to 38,000 grams per mole as determined by gel permeation chromatography relative to linear bisphenol A polycarbonate standards, produced by interfacial polymerization and endcapped with p-cumylphenol | SABIC |
| PC-Si-20 | PDMS (polydimethylsiloxane)-Bisphenol A polycarbonate copolymer, 20 wt% | SABIC |
| | siloxane, average PDMS block length 45 units (D45), Mw 29,000-31,000 g/mol as determined by GPC using polycarbonate standards, eugenol end-capped | |
| ABS | Acrylonitrile-butadiene-styrene copolymer, CAS Reg. No. 9003-56-9, having about 14-18 wt% butadiene and about 13-18 wt% acrylonitrile. | SABIC |
| PPE-Si | A mixture of poly(2,6-dimethyl-1,4-phenylene ether) (CAS Reg. No. 24938-67-8) and poly(2,6-dimethyl-1,4-phenylene ether-polydimethylsiloxane block copolymer (CAS Reg. No. 1202019-56-4), the mixture having a polysiloxane content of about 5 wt% and an intrinsic viscosity of about 0.40 deciliter per gram as measured in chloroform at 25°C; prepared according to the procedure of U.S. Patent No. 8,017,697 to Carrillo et al., Example 16 | SABIC |
| PEI-Si-1 | Poly(etherimide-dimethylsiloxane) copolymer, PEI units derived from phenylene diamine and BPA-dianhydride, siloxane content 40 wt% (SILTEM) | SABIC |
| PEI-Si-2 | Poly(etherimide-dimethylsiloxane) copolymer, PEI units derived from phenylene diamine and BPA-dianhydride, siloxane content 20 wt% (SILTEM) | SABIC |
| SAN | Styrene acrylonitrile including 23.5-26.5 wt% acrylonitrile and 73.5-76.5 wt% styrene | SABIC |
| TSAN | Encapsulated Polytetrafluoroethylene, CAS Reg. No. 9002-84-0, with 47-53 wt% poly(tetrafluoroethylene) | SABIC |
| BPADP | Bisphenol A-diphenyl phosphate, CAS Reg. No. 5945-33-5, 8.9 wt% phosphorus | Chemtura |
| KSS | Potassium diphenylsulfonesulfonate, CAS Reg. No. 63316-43-8 | Arichem |
| PPZ | Phenoxy phosphazene, 13.94 wt% phosphorus | Fushimi |

The testing samples were prepared as described below and the following test methods were used.

Typical compounding procedures are described as follows: The various formulations were prepared by direct dry-blending of the raw materials and homogenized with a paint shaker prior to compounding. The formulations were compounded on a 25 mm Werner Pfleiderer ZSK co-rotating twin-screw extruder with a vacuum vented standard mixing screw operated at a screw speed of 300 rpm. The temperature profile is given in Table 2. The strand was cooled through a water bath prior to pelletizing. An Engel 45,75, 90 molding machine was used to mold the test parts for standard physical property testing. The pellets were dried for 3-4 hours at 90-110 °C in a forced air-circulating oven prior to injection molding. Table 3 lists the temperature profiles of the molding conditions.

**Table 2.**

| Parameters | Unit | 25 mm ZSK |
|---|---|---|
| Die | - | 2 holes |
| Feed temperature | °C | 40 |
| Zone 1 temp. | °C | 180-200 |
| Zone 2-8 temp. | °C | 250-310 |
| Die temperature | °C | 250-310 |
| Screw speed | rpm | 300 |
| Throughput | kg/h | 15-25 |
| Vacuum 1 | bar | ∼0.7 |

**Table 3.**

| Molding machine | UOM | Engel Molding Machine |
|---|---|---|
| Pre-drying time | h | 3-4 |
| Pre-drying temp. | °C | 90-110 |
| Hopper temp. | °C | 40 |
| Zone 1 temp. | °C | 250-280 |
| Zone 2 temp. | °C | 265-295 |
| Zone 3 temp. | °C | 270-300 |
| Nozzle temp. | °C | 265-295 |
| Mold temperature | °C | 75-90 |
| Screw speed | rpm | 25 |
| Back pressure | bar | 7 |
| Injection time | s | 1.9 |
| Approx. cycle time | s | 45 |

Flammability tests were performed on samples at a thickness of 1.5 mm and less in accordance with the Underwriter's Laboratory (LTL) LTL 94 standard. In some cases, a second set of 5 bars was tested to give an indication of the robustness of the rating. In this report the following definitions are used as shown in Table 4. Total flame-out-times for all bars (FOT = t1 + t2) were determined.

**Table 4.**

| | V-0 | V-1 | V-2 |
|---|---|---|---|
| After-flame time for each individual specimen t₁ and t₂ | ≤ 10 s | ≤ 30 s | ≤ 30 s |
| Total after-flame time for an condition set (t₁ plus t₂ for the 5 specimens) | ≤ 50 s | ≤ 250 s | ≤ 250 s |
| After-flame plus afterglow time for each individual specimen after the second flame application (t₂ + t₃) | ≤ 30 s | ≤ 60 s | ≤ 60 s |
| After-flame or after-glow of any specimen up to the holding clamp | No | No | Yes |
| Cotton indicator ignited by flaming particles or drops | No | No | No |

### Prophetic Examples 1-31

Table 5 below provides the compositions and properties for the following comparative examples and examples of the polycarbonate compositions. Comparative examples are indicated with an asterisk.

The compositions of Table 5 include a BPA homopolycarbonate, a poly(etherimide-siloxane), and KSS as the flame retardant.

**Table 5.**

| Item | Unit | 1* | 2* | 3* | 4* | 5 | 6 | 7* | 8* | 9* | 10 |
|---|---|---|---|---|---|---|---|---|---|---|---|
| PC | wt% | 99.02 | 99.52 | 94.52 | 89.52 | 94.52 | 94.52 | 76.82 | 77.32 | 72.32 | 72.32 |
| PC-Si-20 | wt% | | | | | | | 22.2 | 22.2 | 22.2 | 22.2 |
| PPE-Si | wt% | | | 5 | 10 | | | | | 5 | |
| PEI-Si-1 | wt% | | | | | 5 | | | | | 5 |
| PEI-Si-2 | wt% | | | | | | 5 | | | | |
| PETS | wt% | 0.1 | 0.1 | 0.1 | 0.1 | 0.1 | 0.1 | 0.1 | 0.1 | 0.1 | 0.1 |
| Irgafos | wt% | 0.08 | 0.08 | 0.08 | 0.08 | 0.08 | 0.08 | 0.08 | 0.08 | 0.08 | 0.08 |
| KSS | wt% | 0.3 | 0.3 | 0.3 | 0.3 | 0.3 | 0.3 | 0.3 | 0.3 | 0.3 | 0.3 |
| TSAN | wt% | 0.5 | | | | | | 0.5 | | | |
| Total | wt% | 100 | 100 | 100 | 100 | 100 | 100 | 100 | 100 | 100 | 100 |
| Siloxane | wt% | 0 | 0 | 0.25 | 0.5 | 2.0 | 1.0 | 4.44 | 4.44 | 4.69 | 6.44 |

Examples 1-10 show the effect of replacing a conventional anti-drip agent such as TSAN with siloxane-containing copolymers. Comparative Examples 1-2 do not include poly(ether imide siloxane) (PEI-Si) and Comparative Example 1 includes a conventional fluorinated anti-drip agent (TSAN). Comparative Examples 3-4 include a poly(phenylene ether siloxane) (PPE-Si) as an anti-drip agent and excludes TSAN. Examples 5-6 include PEI-Si and KSS as the flame retardant. Comparative Examples 7-8 include polycarbonate siloxane (PC-Si) alone as the anti-drip agent. Comparative Example 9 includes a combination of PC-Si and PPE-Si as the anti-drip agent. Example 10 includes a combination of PC-Si and PEI-Si as the anti-drip agent.

The compositions of Table 5 include a combination of a polycarbonate siloxane) and a poly(ether imide siloxane) with non-fluorinated flame retardant (i.e., KSS or PPZ).

**Table 5.**

| Item | Unit | 11 | 12 | 13 | 14 | 15* | 16 | 17* | 18 | 19* | 20 | 21 |
|---|---|---|---|---|---|---|---|---|---|---|---|---|
| PC | wt% | 75.32 | 72.32 | 70.32 | 67.32 | 74.12 | 69.12 | 91.32 | 86.32 | 94.52 | 89.52 | 84.52 |
| PC-Si-20 | wt% | 22.2 | 22.2 | 22.2 | 22.2 | 22.2 | 22.2 | | | | | |
| PC-Si-40 | wt% | | | | | | | 5 | 5 | 5 | 5 | 5 |
| PEI-Si-2 | wt% | 2 | 5 | 7 | 10 | | 5 | | 5 | | 5 | 10 |
| PPZ | wt% | | | | | 3.5 | 3.5 | 3.5 | 3.5 | | | |
| PETS | wt% | 0.1 | 0.1 | 0.1 | 0.1 | 0.1 | 0.1 | 0.1 | 0.1 | 0.1 | 0.1 | 0.1 |
| Irgafos | wt% | 0.08 | 0.08 | 0.08 | 0.08 | 0.08 | 0.08 | 0.08 | 0.08 | 0.08 | 0.08 | 0.08 |
| KSS | wt% | 0.3 | 0.3 | 0.3 | 0.3 | | | | | 0.3 | 0.3 | 0.3 |
| Total | wt% | 100 | 100 | 100 | 100 | 100 | 100 | 100 | 100 | 100 | 100 | 100 |
| Siloxane | wt% | 4.84 | 5.44 | 5.84 | 6.44 | 4.44 | 5.44 | 2.0 | 3.0 | 2.0 | 3.0 | 4.0 |

The compositions of Table 6 include compositions wherein the thermoplastic polymer is a polycarbonate/ABS blend, a polycarbonate/SAN blend, or a polycarbonate/PBT blend.

**Table 6.**

| Item | Unit | 22* | 23 | 24* | 25 | 26* | 27 | 26* | 27 | 28* | 29 | 30* | 31 |
|---|---|---|---|---|---|---|---|---|---|---|---|---|---|
| PC | wt% | 68.82 | 63.82 | 79.82 | 74.82 | 46.32 | 41.32 | 78.52 | 73.52 | 75.32 | 70.32 | 90.52 | 85.52 |
| PC-Si-20 | wt% | 12 | 12 | | | 25 | 25 | 12 | 12 | 12 | 12 | | |
| ABS | wt% | 5.5 | 5.5 | 5 | 5 | | | | | | | | |
| PBT | wt% | | | | | 20 | 20 | | | | | | |
| SAN | wt% | 3.5 | 3.5 | 5 | 5 | | | | | | | | |
| PEI-Si-2 | wt% | | 5 | | 5 | | 5 | | 5 | | 5 | | 5 |
| BPA-DP | wt% | 10 | 10 | 10 | 10 | 8.5 | 8.5 | | | | | | |
| PPZ | wt% | | | | | | | | | 3.5 | 3.5 | | |
| PETS | wt% | 0.1 | 0.1 | 0.1 | 0.1 | 0.1 | 0.1 | 0.1 | 0.1 | 0.1 | 0.1 | 0.1 | 0.1 |
| Irgafos | wt% | 0.08 | 0.08 | 0.08 | 0.08 | 0.08 | 0.08 | 0.08 | 0.08 | 0.08 | 0.08 | 0.08 | 0.08 |
| KSS | wt% | | | | | | | 0.3 | 0.3 | | | 0.3 | 0.3 |
| GF | wt% | | | | | | | 9 | 9 | 9 | 9 | 9 | 9 |
| Total | wt% | 100 | 100 | 100 | 100 | 100 | 100 | 100 | 100 | 100 | 100 | 100 | 100 |
| Siloxane | wt% | 2.4 | 3.4 | 0 | 1.0 | 5.0 | 6.0 | 2.4 | 3.4 | 2.4 | 3.4 | 0 | 1.0 |

This disclosure further encompasses the following aspects.

Aspect 1. A polycarbonate composition including: a polycarbonate; or a polycarbonate and a poly(alkylene ester); optionally, a nitrile-containing aromatic copolymer including acrylonitrile butadiene styrene copolymer, styrene acrylonitrile copolymer, or a combination thereof; a siloxane component including a poly(etherimide-siloxane) and optionally, a polycarbonate siloxane); a flame retardant composition including a non-fluorinated flame retardant and optionally, an anti-drip agent; optionally, a reinforcing filler; optionally, an additive composition; wherein the sum of the polycarbonate, the poly(etherimide-siloxane), the non-fluorinated flame retardant, the optional a poly(alkylene ester), the optional polycarbonate siloxane), the optional reinforcing filler, and the optional additive composition totals 100 wt%.

Aspect 2. The polycarbonate composition of aspect 1, wherein the siloxane component is a poly(etherimide-siloxane).

Aspect 3. The polycarbonate composition of aspect 2, wherein the poly(etherimide-siloxane) is present in an amount effective to provide 0.5-5 wt% siloxane repeating units.

Aspect 4. The polycarbonate composition of aspect 1, wherein the siloxane component includes a poly(etherimide-siloxane) and a polycarbonate siloxane).

Aspect 4a. The polycarbonate composition of aspect 4, wherein the polycarbonate siloxane) is present in an amount effective to provide up to 6 wt% siloxane repeating units, based on the total composition.

Aspect 4b. The polycarbonate composition of aspect 4, wherein the poly(etherimide-siloxane) is present in an amount effective to provide 0.5-5 wt% siloxane repeating units and the poly(carbonate siloxane) is present in an amount effective to provide up to 6 wt% siloxane repeating units, each based on the total composition.

Aspect 5. The polycarbonate composition of any one of the preceding aspects, wherein: the calculated added bromine and chlorine content of the polycarbonate composition are each 900 ppm or less and the calculated total added halogen content of the polycarbonate composition is 1500 ppm or less; or the calculated added bromine, chlorine, and fluorine content of the polycarbonate composition are each 900 ppm or less and the calculated total added bromine, chlorine, and fluorine content of the polycarbonate composition is 1500 ppm or less.

Aspect 6. The polycarbonate composition of any one of the preceding aspects, wherein the polycarbonate composition includes a polycarbonate and a nitrile-containing aromatic copolymer.

Aspect 6a. The polycarbonate composition of any one of the preceding aspects, wherein the non-fluorinated flame retardant includes a salt of aromatic sulfonates, a salt of aromatic sulfone sulfonates, an organophosphorus compound, or a combination thereof.

Aspect 7. The polycarbonate composition of any one of the preceding aspects, wherein the polycarbonate composition includes a polycarbonate and a poly(alkylene ester).

Aspect 8. The polycarbonate composition of any one of the preceding aspects, wherein the includes a homopolycarbonate, a copolycarbonate, or a combination thereof.

Aspect 9. The polycarbonate composition of any one of the preceding aspects, the polycarbonate compositions include: a polycarbonate, preferably a BPA homopolycarbonate; a siloxane component including a poly(etherimide-siloxane) and optionally, a polycarbonate siloxane); a flame retardant composition including a non-fluorinated flame retardant and optionally, an anti-drip agent; optionally, a reinforcing filler; and optionally, an additive composition, wherein the sum of the polycarbonate, the siloxane component, the flame retardant composition; and the optional additive composition total 100 wt%.

Aspect 10. The polycarbonate composition of any one of the preceding aspects, the polycarbonate compositions include: a polycarbonate, preferably a BPA homopolycarbonate; a nitrile-containing aromatic copolymer including acrylonitrile butadiene styrene copolymer, styrene acrylonitrile copolymer, or a combination thereof; a siloxane component including a poly(etherimide-siloxane) and optionally, a polycarbonate siloxane); a flame retardant composition including a non-fluorinated flame retardant and optionally, an anti-drip agent; optionally, a reinforcing filler; and optionally, an additive composition, wherein the sum of the polycarbonate the optional nitrile-containing aromatic copolymer, the siloxane component, the flame retardant composition; the optional reinforcing filler; and the optional additive composition total 100 wt%.

Aspect 11. The polycarbonate composition of any one of the preceding aspects including: a polycarbonate, preferably a BPA homopolycarbonate, and a polycarbonate and poly(alkylene ester), preferably a poly(butylene terephthalate); optionally, a nitrile-containing aromatic copolymer including acrylonitrile butadiene styrene copolymer, styrene acrylonitrile copolymer, or a combination thereof; a siloxane component including a poly(etherimide-siloxane) and optionally, a polycarbonate siloxane); a flame retardant composition including a non-fluorinated flame retardant and optionally, an anti-drip agent; optionally, a reinforcing filler; and optionally, an additive composition, wherein the sum of the polycarbonate, the poly(alkylene ester), the optional nitrile-containing aromatic copolymer, the siloxane component, the flame retardant composition; the optional reinforcing filler; and the additive composition total 100 wt%.

Aspect 12a. The polycarbonate composition of any one of aspects 9-11, wherein the poly(etherimide-siloxane) is present in an amount effective to provide 0.5-5 wt%, or 0.5-3 wt% siloxane repeating units.

Aspect 12b. The polycarbonate composition of any one of aspects 9-11 and 12a, wherein: the calculated added bromine and chlorine content of the polycarbonate composition are each about 900 ppm or less and the calculated total added halogen content of the polycarbonate composition is about 1500 ppm or less; or the calculated added bromine, chlorine, and fluorine content of the polycarbonate composition are each about 900 ppm or less and the calculated total added bromine, chlorine, and fluorine content of the polycarbonate composition is about 1500 ppm or less.

Aspect 12c. The polycarbonate composition of any one of aspects 9-11 and 12a-12b, wherein the polycarbonate siloxane) includes a polycarbonate siloxane) including 30-70 wt% siloxane repeating units, a polycarbonate siloxane) including 10 to less than 30 wt% siloxane repeating units, a polycarbonate siloxane) including less than 10 wt% siloxane repeating units, or a combination thereof, each based on the total composition.

Aspect 12d. The polycarbonate composition of Aspect 12c, wherein the poly(carbonate siloxane) is a poly(carbonate siloxane) including 30-70 wt% siloxane repeating units.

Aspect 12e. The polycarbonate composition of Aspect 12c, wherein the poly(carbonate siloxane) is a poly(carbonate siloxane) including 10 to less than 30 wt% siloxane repeating units.

Aspect 12f. The polycarbonate composition of Aspect 12c, wherein the poly(carbonate siloxane) is a combination of a poly(carbonate siloxane) including 30-70 wt% siloxane repeating units and a poly(carbonate siloxane) including 10 to less than 30 wt% siloxane repeating units.

Aspect 12g. The polycarbonate composition of any of the preceding aspects, wherein the additive composition includes antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, and radiation stabilizers.

Aspect 12h. polycarbonate composition of Aspect 12g, wherein the additive composition excludes flame retardants and anti-drip agents.

Aspect 13. A method of making the polycarbonate composition of any of the preceding aspects, the method including melt-mixing the components of the composition, and optionally extruding the composition.

Aspect 14. An article including the polycarbonate composition of any of aspects 1 to 12, wherein the article includes an extruded article, a molded article, pultruded article, a thermoformed article, a foamed article, a layer of a multi-layer article, a substrate for a coated article, a substrate for a metallized article, or a thin film.

Aspect 15. A method for forming the article according to aspect 14, including molding, casting, or extruding the composition to provide the article.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof' is open and includes any combination comprising at least one of the listed components or properties optionally together with a like or equivalent component or property not listed

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A polycarbonate composition comprising:
a polycarbonate; or a polycarbonate and a poly(alkylene ester);
optionally, a nitrile-containing aromatic copolymer comprising acrylonitrile butadiene styrene copolymer, styrene acrylonitrile copolymer, or a combination thereof;
a siloxane component comprising a poly(etherimide-siloxane) and optionally, a polycarbonate siloxane);
a flame retardant composition comprising a non-fluorinated flame retardant and optionally, an anti-drip agent;
optionally, a reinforcing filler;
optionally, an additive composition;
wherein the sum of the polycarbonate, the poly(etherimide-siloxane), the flame retardant composition, the optional poly(alkylene ester), the optional polycarbonate siloxane), the optional reinforcing filler, and the optional additive composition totals 100 wt%.

2. The polycarbonate composition of claim 1, wherein the siloxane component is a poly(etherimide-siloxane).

3. The polycarbonate composition of claim 1, wherein the poly(etherimide-siloxane) is present in an amount effective to provide 0.5-5 wt% siloxane repeating units.

4. The polycarbonate composition of claim 1, wherein the siloxane component comprises a poly(etherimide-siloxane) and a poly(carbonate siloxane).

5. The polycarbonate composition of any one of the preceding claims, wherein:
the calculated added bromine and chlorine content of the polycarbonate composition are each 900 ppm or less and the calculated total added halogen content of the polycarbonate composition is 1500 ppm or less; or
the calculated added bromine, chlorine, and fluorine content of the polycarbonate composition are each 900 ppm or less and the calculated total added bromine, chlorine, and fluorine content of the polycarbonate composition is 1500 ppm or less.

6. The polycarbonate composition of any one of the preceding claims, wherein the polycarbonate composition comprises a polycarbonate and a nitrile-containing aromatic copolymer.

7. The polycarbonate composition of any one of the preceding claims, wherein the polycarbonate composition comprises a polycarbonate and a poly(alkylene ester).

8. The polycarbonate composition of any one of the preceding claims, wherein the polycarbonate comprises a homopolycarbonate, a copolycarbonate, or a combination thereof.

9. The polycarbonate composition of any one of the preceding claims comprising:
a polycarbonate, preferably a bisphenol A homopolycarbonate;
a siloxane component comprising a poly(etherimide-siloxane) and optionally, a polycarbonate siloxane);
a flame retardant composition comprising a non-fluorinated flame retardant and optionally, an anti-drip agent;
optionally, a reinforcing filler;
optionally, an additive composition;
wherein:
the calculated added bromine and chlorine content of the polycarbonate composition are each about 900 ppm or less and the calculated total added halogen content of the polycarbonate composition is about 1500 ppm or less; or
the calculated added bromine, chlorine, and fluorine content of the polycarbonate composition are each about 900 ppm or less and the calculated total added bromine, chlorine, and fluorine content of the polycarbonate composition is about 1500 ppm or less, and
the sum of the polycarbonate, the siloxane component, the flame retardant composition, the optional polycarbonate siloxane), the optional reinforcing filler, and the optional additive composition total 100 wt%.

10. The polycarbonate composition of any one of the preceding claims comprising:
a polycarbonate, preferably a bisphenol A homopolycarbonate;
a nitrile-containing aromatic copolymer comprising acrylonitrile butadiene styrene copolymer, styrene acrylonitrile copolymer, or a combination thereof;
a siloxane component comprising a poly(etherimide-siloxane) and optionally, a polycarbonate siloxane);
a flame retardant composition comprising a non-fluorinated flame retardant and optionally, an anti-drip agent;
optionally, a reinforcing filler;
optionally, an additive composition;
wherein:
the calculated added bromine and chlorine content of the polycarbonate composition are each about 900 ppm or less and the calculated total added halogen content of the polycarbonate composition is about 1500 ppm or less; or
the calculated added bromine, chlorine, and fluorine content of the polycarbonate composition are each about 900 ppm or less and the calculated total added bromine, chlorine, and fluorine content of the polycarbonate composition is about 1500 ppm or less, and
the sum of the polycarbonate, the nitrile-containing aromatic copolymer, the siloxane component, the flame retardant composition; the optional reinforcing filler; and the optional additive composition total 100 wt%.

11. The polycarbonate composition of any one of the preceding claims comprising:
a polycarbonate, preferably a bisphenol A homopolycarbonate, and a poly(alkylene ester),
preferably a poly(butylene terephthalate);
a siloxane component comprising a poly(etherimide-siloxane) and optionally, a polycarbonate siloxane);
a flame retardant composition comprising a non-fluorinated flame retardant and optionally, an anti-drip agent;
optionally, a reinforcing filler;
optionally, an additive composition;
wherein:
the calculated added bromine and chlorine content of the polycarbonate composition are each about 900 ppm or less and the calculated total added halogen content of the polycarbonate composition is about 1500 ppm or less; or
the calculated added bromine, chlorine, and fluorine content of the polycarbonate composition are each about 900 ppm or less and the calculated total added bromine, chlorine, and fluorine content of the polycarbonate composition is about 1500 ppm or less, and
the sum of the polycarbonate, the poly(alkylene ester), the siloxane component, the flame retardant composition, the optional reinforcing filler, and the optional additive composition total 100 wt%.

12. The polycarbonate composition of any one of claims 9-11, wherein the poly(etherimide-siloxane) is present in an amount effective to provide 0.5-3 wt% siloxane repeating units.

13. A method of making the polycarbonate composition of any of claims 1 to 12, the method comprising melt-mixing the components of the composition, and optionally extruding the composition.

14. An article comprising the polycarbonate composition of any of claims 1 to 12, wherein the article comprises an extruded article, a molded article, pultruded article, a thermoformed article, a foamed article, a layer of a multi-layer article, a substrate for a coated article, a substrate for a metallized article, or a thin film.

15. A method for forming the article according to claim 14, comprising molding, casting, or extruding the composition to provide the article.
